(19)

Europäisches
Patentamt
European
Patent Office
Office européen
des brevets

(11) **EP 4 583 568 A1**

(12) **EUROPEAN PATENT APPLICATION**
published in accordance with Art. 153(4) EPC

(43) Date of publication:
**09.07.2025 Bulletin 2025/28**

(21) Application number: **22956822.5**

(22) Date of filing: **30.08.2022**

(51) International Patent Classification (IPC):
***H04W 24/08*** (2009.01)  ***H04B 7/0452*** (2017.01)

(52) Cooperative Patent Classification (CPC):
**H04B 7/0452; H04W 24/08**

(86) International application number:
**PCT/CN2022/115967**

(87) International publication number:
**WO 2024/044990 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **CHI, Liangang
  Beijing 100085 (CN)**
• **YANG, Li
  Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **PRE-CODING METHOD AND APPARATUS BASED ON RECONFIGURABLE INTELLIGENT SURFACE**

(57) Disclosed in the embodiments of the present disclosure are a precoding method and apparatus based on a reconfigurable intelligent surface. The method includes: acquiring unit arrangement information and blocking information of a second network device, wherein the blocking information is used for indicating a plurality of blocks of the second network device; receiving channel feedback information sent by a terminal; determining first indication information according to the channel feedback information, the unit arrangement information and the blocking information, wherein the first indication information is used for determining a phase shift matrix of the second network device; and sending the first indication information to the second network device. Therefore, units of a second network device may be divided into a plurality of groups, such that a far-field assumption is established for each group; in addition, the complexity of precoding based on a reconfigurable intelligent surface is effectively reduced, the communication efficiency of a communication system assisted by the reconfigurable intelligent surface is improved, and the interference is reduced.

| |
|---|
| obtaining unit arrangement information and block information of a second network device, where the block information indicates a plurality of blocks of the second network device — 201 |
| receiving channel feedback information sent by a terminal — 202 |
| determining first indication information according to the channel feedback information, the unit arrangement information and the block information, where the first indication information is used to determine a phase shift matrix for the second network device — 203 |
| sending the first indication information to the second network device — 204 |

FIG. 2

EP 4 583 568 A1

**Description**

**FIELD**

The present disclosure relates to the field of communication technologies, and in particular relates to a method and apparatus for precoding based on a reconfigurable intelligence surface (RIS).

**BACKGROUND**

Uncontrollability of the wireless environment in the existing communications often reduces quality of service. With researches on deploying a reconfigurable intelligent surface (RIS) on a surface of various objects in the wireless transmission environment, it is expected to solve the uncontrollability of the existing wireless channels, build intelligent programmable wireless environment, and introduce a new paradigm of future wireless communications.

However, a size of an RIS array is usually large and is comparable to a propagation distance, and a precoding scheme based on the existing far-field hypothesis may no longer be applicable.

**SUMMARY**

According to a first aspect of embodiments of the present disclosure, there is provided a method for precoding based on an RIS, performed by a first network device, including: obtaining unit arrangement information and block information of a second network device, where the block information indicates a plurality of blocks of the second network device; receiving channel feedback information sent by a terminal, where the channel feedback information is determined by the terminal according to a reference signal sent from each block of the second network device; determining first indication information according to the channel feedback information, the unit arrangement information and the block information, where the first indication information is used to determine a phase shift matrix for the second network device; and sending the first indication information to the second network device.

According to a second aspect of embodiments of the present disclosure, there is provided a method for precoding based on an RIS, performed by a second network device, including: sending unit arrangement information and block information of the second network device to a first network device, where the block information indicates a plurality of blocks of the second network device; sending a reference signal to a terminal, where the reference signal is used by the terminal to determine channel feedback information; receiving first indication information sent by the first network device, where the first indication information is determined by the first network device according to the channel feedback information, the unit arrangement information and the block information; and determining a phase shift matrix for the second network device according to the first indication information.

According to a third aspect of embodiments of the present disclosure, there is provided a method for precoding based on an RIS, performed by a terminal, including: receiving a reference signal sent from each block of a second network device; determining channel feedback information of a channel between the second network device and the terminal according to the reference signal; and sending the channel feedback information to a first network device, where the channel feedback information is used to determine first indication information, and the first indication information is used to determine a phase shift matrix for the second network device.

According to a fourth aspect of embodiments of the present disclosure, there is provided an apparatus for precoding based on an RIS, applied to a first network device, including: a transceiving module configured to: obtain unit arrangement information and block information of a second network device, where the block information indicates a plurality of blocks of the second network device, and receive channel feedback information sent by a terminal, where the channel feedback information is determined by the terminal according to a reference signal sent from each block of the second network device; and a processing module configured to determine first indication information according to the channel feedback information, the unit arrangement information and the block information, where the first indication information is used to determine a phase shift matrix for the second network device. The transceiving module is further configured to send the first indication information to the second network device.

According to a fifth aspect of embodiments of the present disclosure, there is provided an apparatus for precoding based on an RIS, applied to a second network device, including: a transceiving module configured to: send unit arrangement information and block information of a second network device to a first network device, where the block information indicates a plurality of blocks of the second network device, send a reference signal to a terminal, where the reference signal is used by the terminal to determine channel feedback information, and receive first indication information sent by the first network device, where the first indication information is determined by the first network device according to the channel feedback information, the unit arrangement information and the block information; and a processing module configured to determine a phase shift matrix for the second network device according to the first indication information.

According to a sixth aspect of embodiments of the present disclosure, there is provided an apparatus for precoding based on an RIS, applied to a terminal, including: a transceiving module configured to receive a reference signal sent from each block of a second network device; and a processing module configured to determine channel feedback information of a channel between the second network device and a terminal according to the reference signal. The transceiving module is further configured to send the channel feedback information to a first network device, where the channel feedback information is used to determine first indication information, and the first indication information is used to determine a phase shift matrix for the second network device.

According to a seventh aspect of embodiments of the present disclosure, there is provided a communication device. The device includes a processor and a memory. A computer program is stored in the memory. The processor executes the computer program stored in the memory to cause the device to perform the method for precoding based on the RIS described in the above embodiments of the first aspect, or perform the method for precoding based on the RIS described in the above embodiments of the second aspect.

According to an eighth aspect of embodiments of the present disclosure, there is provided a communication device. The device includes a processor and a memory. A computer program is stored in the memory. The processor executes the computer program stored in the memory to cause the device to perform the method for precoding based on the RIS described in the above embodiments of the third aspect, or perform the method for precoding based on the RIS described in the above embodiments of the fourth aspect.

According to a ninth aspect of embodiments of the present disclosure, there is provided a communication device. The device includes a processor and an interface circuit. The interface circuit is configured to receive code instructions and transmit them to the processor. The processor is configured to run the code instructions to cause the device to perform the method for precoding based on the RIS described in the above embodiments of the first aspect, or perform the method for precoding based on the RIS described in the above embodiments of the second aspect.

According to a tenth aspect of embodiments of the present disclosure, there is provided a communication device. The device includes a processor and an interface circuit. The interface circuit is configured to receive code instructions and transmit them to the processor. The processor is configured to run the code instructions to cause the device to perform the method for precoding based on the RIS described in the above embodiments of the third aspect.

According to an eleventh aspect of embodiments of the present disclosure, there is provided a computer-readable storage medium for storing instructions. When the instructions are executed, the method for precoding based on the RIS described in the above embodiments of the first aspect or the second aspect is implemented.

According to a twelfth aspect of embodiments of the present disclosure, there is provided a computer-readable storage medium for storing instructions. When the instructions are executed, the method for precoding based on the RIS described in the above embodiments of the third aspect is implemented.

According to a thirteenth aspect of embodiments of the present disclosure, there is provided a computer program that, when run on a computer, causes the computer to execute the method for precoding based on the RIS described in the above embodiments of the first aspect or the second aspect.

According to a fourteenth aspect of embodiments of the present disclosure, there is provided a computer program that, when run on a computer, causes the computer to execute the method for precoding based on the RIS described in the above embodiments of the third aspect.

With the method and apparatus for precoding based on the RIS, by obtaining the unit arrangement information and the block information of the second network device, where the block information indicates the plurality of blocks of the second network device, receiving the channel feedback information sent by the terminal, determining the first indication information according to the channel feedback information, the unit arrangement information and the block information, where the first indication information is used to determine the phase shift matrix for the second network device, and sending the first indication information to the second network device, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

Additional aspects and advantages of the present disclosure will be partly set forth in the following description, and will become apparent from the following description or learned by practice of the present disclosure.

## BRIEF DESCRIPTION OF THE DRAWINGS

In order to more clearly illustrate embodiments of the present disclosure or technical solutions in the related art, a brief description of drawings used in the embodiments or in the related art is given below.

FIG. 1 is a schematic diagram illustrating an architecture of a communication system according to embodiments of the present disclosure.
FIG. 2 is a flow chart illustrating a method for precoding based on an RIS according to embodiments of the present disclosure.

FIG. 3 is a flow chart illustrating a method for precoding based on an RIS according to embodiments of the present disclosure.

FIG. 4 is a flow chart illustrating a method for precoding based on an RIS according to embodiments of the present disclosure.

FIG. 5 is a flow chart illustrating a method for precoding based on an RIS according to embodiments of the present disclosure.

FIG. 6A is a schematic diagram illustrating spatial positions of a terminal and a second network device provided according to embodiments of the present disclosure.

FIG. 6B is a schematic diagram illustrating spatial positions in a plan of x and z axes of a terminal and a second network device provided according to embodiments of the present disclosure.

FIG. 6C is a schematic diagram illustrating spatial positions in a plan of y and z axes of a terminal and a second network device provided according to embodiments of the present disclosure.

FIG. 7 is a flow chart illustrating a method for precoding based on an RIS according to embodiments of the present disclosure.

FIG. 8 is a flow chart illustrating a method for precoding based on an RIS according to embodiments of the present disclosure.

FIG. 9 is a flow chart illustrating a method for precoding based on an RIS according to embodiments of the present disclosure.

FIG. 10 is a flow chart illustrating a method for precoding based on an RIS according to embodiments of the present disclosure.

FIG. 11 is a flow chart illustrating a method for precoding based on an RIS according to embodiments of the present disclosure.

FIG. 12 is a flow chart illustrating a method for precoding based on an RIS according to embodiments of the present disclosure.

FIG. 13 is a flow chart illustrating a method for precoding based on an RIS according to embodiments of the present disclosure.

FIG. 14 is a block diagram illustrating an apparatus for precoding based on an RIS according to embodiments of the present disclosure.

FIG. 15 is a block diagram illustrating an apparatus for precoding based on an RIS according to embodiments of the present disclosure.

FIG. 16 is a block diagram illustrating an apparatus for precoding based on an RIS according to embodiments of the present disclosure.

FIG. 17 is a block diagram illustrating a device for precoding based on an RIS according to embodiments of the present disclosure.

FIG. 18 is a block diagram illustrating a chip according to embodiments of the present disclosure.

DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The embodiments set forth in the following description of illustrative embodiments do not represent all embodiments consistent with embodiments of the present disclosure. They are merely examples of devices and methods consistent with some aspects of embodiments of the present disclosure as recited in the appended claims.

Terms used herein in the embodiments of the present disclosure are for the purpose of describing specific embodiments, but should not be construed to limit the embodiments of the present disclosure. As used in embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

Embodiments of the present disclosure are described in detail below, examples of which are illustrated in the accompanying drawings in which the same or similar reference numerals in different drawings represent the same or similar elements. The embodiments described below with reference to the drawings are illustrative and are intended to explain the present disclosure, which should not be construed as limitations on the present disclosure.

In order to better understand a method for precoding based on a reconfigurable intelligence surface disclosed in the embodiments of the present disclosure, a communication system to which the embodiments of the present disclosure are applicable is described as follows.

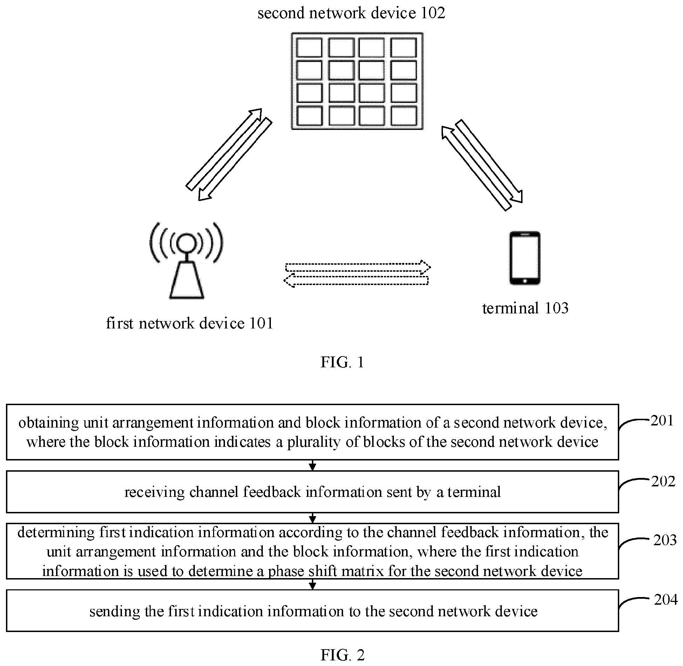

Referring to FIG. 1, FIG. 1 is a schematic diagram illustrating an architecture of a communication system according to embodiments of the present disclosure. The communication system may include, but is not limited to, a first network device, a second network device, and a terminal. The number and form of devices shown in FIG. 1 are merely for example and do not constitute a limitation to the embodiments of the present disclosure. In practical applications, two or more network devices, and two or more terminals may be included. The communication system shown in FIG. 1 is exemplified as including one first network device 101, one second network device 102 and one terminal 103.

It should be noted that the technical solutions of embodiments of the present disclosure may be applied to various communication systems. For example: a long term evolution (LTE) system, a 5th generation (5G) mobile communication system, a 5G new radio (NR) system, or other future new mobile communication systems and the like.

The first network device 101 in the embodiments of the present disclosure is an entity at a network side for transmitting or receiving signals. For example, the first network device 101 may be an evolved NodeB (eNB), a transmission reception point (TRP), a next generation NodeB (gNB) in an NR system, a base station in other future mobile communication systems, or an access node in a wireless fidelity (WiFi) system and the like. The specific technology and specific device form adopted by the access network device are not limited in the embodiments of the present disclosure. The access network device provided by embodiments of the present disclosure may be composed of a central unit (CU) and a distributed unit (DU), in which the CU may also be referred to as a control unit. A protocol layer of the network device, such as a base station, may be split using a CU-DU structure, with the functions of some protocol layers being placed in the CU for centralized control, and the functions of the remaining part or all of the protocol layers being distributed in the DU, and the DU is controlled centrally by the CU.

The second network device 102 in the embodiments of the present disclosure is a device capable of adjusting communication channels. The second network device 102 is provided with a large number of (electromagnetic) units, and may change radiation characteristics of the (electromagnetic) units by adjusting physical properties (such as capacitive reactance, impedance or inductive reactance) of the (electromagnetic) units, and thus may dynamically adjust electromagnetic waves in space to form beams in specific directions in space. For example, the second network device 102 may be a reconfigurable intelligent surface (RIS) or the like. In the embodiments of the present disclosure, the (electromagnetic) units in the second network device 102 may be active or passive. Some (electromagnetic) units in the second network device 102 may be active, and some (electromagnetic) units are passive.

The terminal 103 in embodiments of the present disclosure is an entity at a user side for receiving or transmitting signals, such as a mobile phone. The terminal may also be referred to as a terminal device, a user equipment (UE), a mobile station (MS), a mobile terminal (MT) and the like. The terminal may be an automobile with a communication function, a smart automobile, a mobile phone, a wearable device, a Pad, a computer with a wireless transceiving function, a virtual reality (VR) terminal, an augmented reality (AR) terminal, a wireless terminal in industrial control, and a wireless terminal in self-driving, a wireless terminal in remote medical surgery, a wireless terminal in smart grid, a wireless terminal in transportation safety, a wireless terminal in smart city, a wireless terminal in smart home and the like. The specific technology and specific device form adopted by the terminal are not limited in the embodiments of the present disclosure.

In the existing communication, the wireless environment is uncontrollable, and its uncontrollability usually has a negative effect on communication efficiency and reduces service quality. For example, signal attenuation limits a propagation distance of the wireless signal, a multipath effect causes degradation, and reflection and refraction happened on a large object are uncontrollable factors. By deploying the reconfigurable intelligent surface (RIS) on a surface of various objects in the wireless transmission environment, it is expected to solve the uncontrollability of the existing wireless channels, build intelligent programmable wireless environment, and introduce a new paradigm of future wireless communications. Specifically, the RIS may use the precoding technology to reflect or transmit the signal incident on its surface to a specific direction, thus improving a strength of the signal at the receiving end or reducing interference, and achieving channel control.

As shown in FIG. 1, in the communication system assisted by the second network device (RIS) 102, a signal from the first network device 101 is reflected or transmitted to the terminal 103 via the second network device (RIS) 102, or a signal from the terminal 103 is reflected or transmitted to the first network device 101 via the second network device (RIS) 102. In order to improve a power of the effective signal and reduce interference, the second network device 102 needs precoding.

In the related art, determination of a precoding method of the second network device (RIS) 102 is relatively complex. In academic researches, precodings at the RIS and the base station is jointly designed through an alternating optimization technology. Although the method may achieve an optimal performance, its complexity is too high and is not suitable for practical applications. Meanwhile, a size of an RIS array is often large and comparable to a propagation distance, and the precoding scheme based on the existing far-field hypothesis may no longer be applicable.

It may be understood that the communication system described in the embodiments of the present disclosure is for a purpose of more clearly illustrating the technical solution of embodiments of the present disclosure, which does not constitute a limitation on the technical solutions provided by embodiments of the present disclosure. Moreover, it is known by those skilled in the art that the technical solutions provided by embodiments of the present disclosure are also applicable to similar technical problems with the evolution of the system architecture and the emergence of new business scenarios.

Method and apparatus for precoding based on the reconfigurable intelligence surface provided by the present disclosure will be introduced in detail below with reference to the accompanying drawings.

Referring to FIG. 2, FIG. 2 is a flow chart illustrating a method for precoding based on an RIS according to embodiments of the present disclosure. It should be noted that the method for porecoding based on the RIS is performed by a first network device. The method may be performed separately or together with any other embodiment. As shown in FIG. 2, the method may include the following steps.

In step 201, unit arrangement information and block information of a second network device are obtained. The block information indicates a plurality of blocks of the second network device.

It should be noted that in various embodiments of the present disclosure, the second network device may be a reconfigurable intelligence surface (RIS).

In the embodiment of the present disclosure, the first network device may obtain the unit arrangement information and the block information of the second network device. The block information of the second network device indicates the plurality of blocks of the second network device. The unit arrangement information of the second network device indicates arrangement of the units in the second network device.

It should be noted that each block of the second network device is a continuous part of the second network device, such as a continuous surface of the RIS.

It may be understood that the first network device may determine how the units of the second network device are arranged by obtaining the unit arrangement information of the second network device. The first network device may determine individual blocks of the second network device by obtaining the block information of the second network device.

In some embodiments, the unit arrangement information may include at least one of: a numeric count of rows of units of the second network device; a numeric count of columns of units of the second network device; a row spacing of units of the second network device; a column spacing of units of the second network device; or a unit capable of sending a reference signal in the second network device (may also be an active unit in the second network device).

In some embodiments, the block information may include at least one of: a numeric count of rows of units included in each block; a numeric count of columns of units included in each block; or a unit at a center of each block.

It may be understood that the unit arrangement information and the block information of the second network device may be flexibly configured according to a specific shape of the second network device. For example, if the shape of the second network device is circular, the unit arrangement information of the second network device may include a radius or diameter of the second network device, and the block information may include other information to indicate each block of the second network device.

In an embodiment of the present disclosure, the first network device may receive the unit arrangement information and/or the block information reported by the second network device, or the first network device may obtain the unit arrangement information and/or the block information of the second network device during an offline phase.

In some embodiments, the first network device may configure the plurality of blocks of the second network device according to the unit arrangement information of the second network device, and obtain the block information of the second network device.

In an embodiment of the present disclosure, each block of the second network device may send a reference signal.

In step 202, channel feedback information sent by the terminal is received.

In the embodiment of the present disclosure, the first network device may receive the channel feedback information sent by the terminal. The channel feedback information is determined by the terminal according to the reference signal sent from each block of the second network device.

The channel feedback information may reflect a state of a channel between each block of the second network device and the terminal. The first network device may determine, according to the channel feedback information, first indication information for determining a phase shift matrix for the second network device.

In some embodiments, the channel feedback information includes: a plurality of third precoding matrix indicators (PMIs) and an index of a reference signal corresponding to each third PMI. The third PMI indicates a precoding matrix for the channel between each block of the second network device and the terminal.

It may be understood that each block of the second network device is capable of sending a reference signal, and the terminal receives the reference signal sent from each block and estimates the signal to obtain the precoding matrix for the channel between each block and the terminal. The precoding matrix of the channel between each block and the terminal is indicated by one third PMI, and the reference signal sent by the block is indicated by the index of the reference signal corresponding to the third PMI.

In some embodiments, the first network device may send first reference signal configuration information to the second network device according to the unit arrangement information and the block information. The first reference signal configuration information is used to determine the reference signal sent from each block of the second network device.

Optionally, the first reference signal configuration information may include at least one of: a unit, in each block, occupied by the reference signal sent from each block; generation information of a sequence of the reference signal sent from each block; an antenna port number occupied by the reference signal sent from each block; or a time-frequency resource occupied by the reference signal sent from each block.

In some embodiments, the first network device may send second reference signal configuration information to the terminal according to the unit arrangement information and the block information, and the second reference signal configuration information is used by the terminal to receive the reference signal sent from each block of the second network device.

Optionally, the second reference signal configuration information may include at least one of: generation information of a sequence of the reference signal sent from each block; an antenna port number occupied by the reference signal sent from each block; or a time-frequency resource occupied by the reference signal sent from each block.

It may be understood that basic information (the generation information of the sequence of the reference signal, the antenna port number occupied by the reference signal, and the time-frequency resource occupied by the reference signal) of the reference signal sent from each block in the first reference signal configuration information and the second reference signal configuration information are the same, and the terminal may receive, according to the second reference signal configuration information, the reference signal sent by the second network device according to the first reference signal configuration information.

In step 203, first indication information is determined according to the channel feedback information, the unit arrangement information and the block information. The first indication information is used to determine a phase shift matrix for the second network device.

In the embodiment of the present disclosure, the first network device may determine the first indication information based on the received channel feedback information and the obtained unit arrangement information and block information. The first indication information may be used to determine the phase shift matrix for the second network device.

In an embodiment of the present disclosure, the first network device may determine position information of the terminal relative to the second network device according to the channel feedback information, the unit arrangement information and the block information, and determine the first indication information according to the position information.

Optionally, the position information may be represented by coordinates. The first network device and the second network device may establish a coordinate system through a coordinate axis establishment method specified in the protocol, and obtain the coordinates of the terminal in the coordinate system. The first network device and the second network device may also negotiate and determine the coordinate axis establishment method for the coordinate system through signaling.

In some embodiments, the first indication information includes a first precoding matrix or first information, where the first information indicates the first precoding matrix. The first precoding matrix is determined by the first network device according to the unit arrangement information, the block information, the position information, and angle information between the first network device and the second network device. The second network device may determine the phase shift matrix according to the first precoding matrix.

Optionally, the first information may be an index of the first precoding matrix, or may be a first PMI used to indicate the first precoding matrix, or the like.

In some embodiments, the first indication information includes a second precoding matrix or second information, where the second information indicates a second precoding matrix. The second precoding matrix is determined by the first network device according to the unit arrangement information, the block information and the position information. The second network device may determine the phase shift matrix according to the second precoding matrix and the angle information between the first network device and the second network device.

Optionally, the second information may be an index of the second precoding matrix, or may be a second PMI used to indicate the second precoding matrix, or the like.

In some embodiments, the first indication information includes the position information, and the second network device may determine the phase shift matrix for the second network device according to the position information.

In an embodiments of the present disclosure, the angle information between the first network device and the second network device may be departure angle information or incident angle information. The departure angle information refers to information of a departure angle of the signal emitted by the first network device. The incident angle information refers to information of an incident angle of the signal emitted by the first network device and incident on the surface of the second network device.

In some embodiments, the first network device may send angle information between the first network device and the second network device to the second network device.

In step 204, the first indication information is sent to the second network device.

In the embodiment of the present disclosure, after determining the first indication information, the first network device may send the first indication information to the second network device, and the second network device may determine the phase shift matrix based on the first indication information.

The phase shift matrix is used to configure a phase of each unit of the second network device, that is, to realize precoding for the second network device. The second network device may adjust the phase of each unit of the second network device according to the phase shift matrix configuration to implement the precoding for the second network device, and may reflect or transmit signal(s) incident on the surface of the second network device.

In some embodiments, the first indication information includes a first precoding matrix or first information, where the first information indicates a first precoding matrix.

In some embodiments, the first indication information includes a second precoding matrix or second information, where the second information indicates a second precoding matrix.

In some embodiments, the first indication information includes the position information of the terminal relative to the second network device.

In summary, by obtaining the unit arrangement information and the block information of the second network device, where the block information indicates the plurality of blocks of the second network device, receiving the channel feedback information sent by the terminal, determining the first indication information according to the channel feedback information, the unit arrangement information and the block information, where the first indication information is used to determine the phase shift matrix for the second network device, and sending the first indication information to the second network device, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

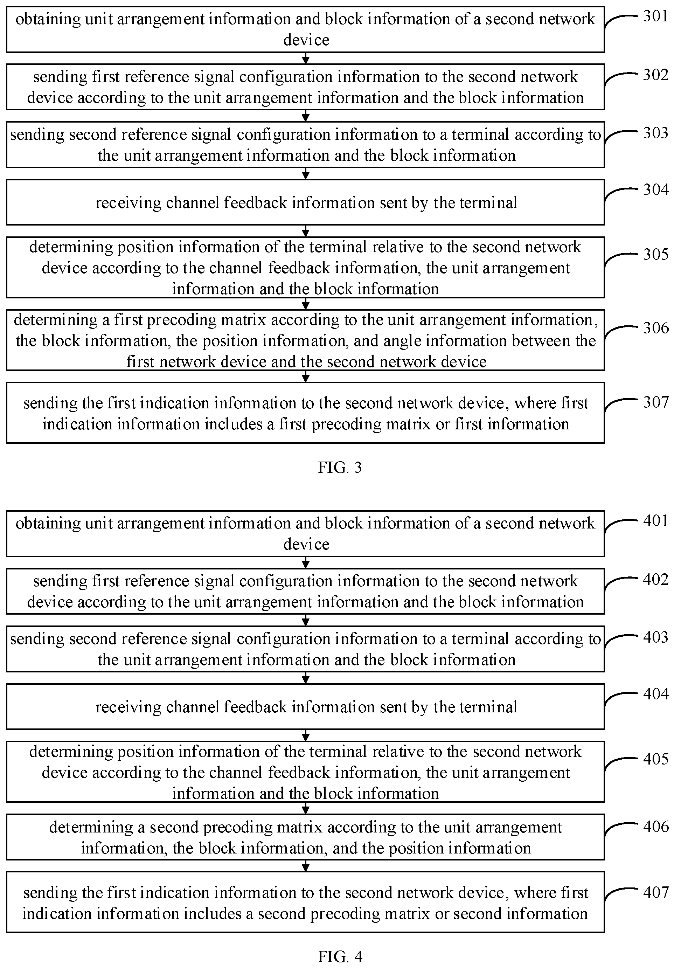

Referring to FIG. 3, FIG. 3 is a flow chart illustrating a method for precoding based on an RIS according to embodiments of the present disclosure. It should be noted that the method for precoding based on the RIS in the embodiments of the present disclosure is performed by the first network device. This method may be performed independently or in conjunction with any other embodiment of the present disclosure. As shown in FIG. 3, the method may include the following steps.

In step 301, unit arrangement information and block information of a second network device are obtained.

It should be noted that in various embodiments of the present disclosure, the second network device may be an RIS.

In the embodiment of the present disclosure, the first network device may obtain the unit arrangement information and the block information of the second network device. The block information of the second network device indicates the plurality of blocks of the second network device. The unit arrangement information of the second network device indicates arrangement of the units in the second network device.

It should be noted that each block of the second network device is a continuous part of the second network device, such as a continuous surface of the RIS.

It may be understood that the first network device may determine how the units of the second network device are arranged by obtaining the unit arrangement information of the second network device. The first network device may determine individual blocks of the second network device by obtaining the block information of the second network device.

In some embodiments, the unit arrangement information may include at least one of: a numeric count of rows of units of the second network device; a numeric count of columns of units of the second network device; a row spacing of units of the second network device; a column spacing of units of the second network device; or a unit capable of sending a reference signal in the second network device (may also be an active unit in the second network device).

In some embodiments, the block information may include at least one of: a numeric count of rows of units included in each block; a numeric count of columns of units included in each block; or a unit at a center of each block.

It may be understood that the unit arrangement information and the block information of the second network device may be flexibly configured according to a specific shape of the second network device. For example, if the shape of the second network device is circular, the unit arrangement information of the second network device may include a radius or diameter of the second network device, and the block information may further include other information to indicate each block of the second network device.

In an embodiment of the present disclosure, the first network device may receive the unit arrangement information and/or the block information reported by the second network device, or the first network device may obtain the unit arrangement information and/or the block information of the second network device during an offline phase.

In some embodiments, the first network device may configure the plurality of blocks of the second network device according to the unit arrangement information of the second network device, and obtain the block information of the second network device.

In an embodiment of the present disclosure, each block of the second network device may send a reference signal.

In step 302, first reference signal configuration information is sent to the second network device according to the unit arrangement information and the block information.

In the embodiment of the present disclosure, the first network device may send the first reference signal configuration information to the second network device according to the unit arrangement information and the block information. The first reference signal configuration information is used to determine the reference signal sent from each block of the second network device. The second network device may determine the reference signal sent from each block according to the first reference signal configuration information.

Optionally, the first reference signal configuration information includes at least one of: a unit, in each block, occupied by the reference signal sent from each block; generation information of a sequence of the reference signal sent from each block; an antenna port number occupied by the reference signal sent from each block; or a time-frequency resource occupied by the reference signal sent from each block.

In step 303, second reference signal configuration information is sent to the terminal according to the unit arrangement information and the block information.

In the embodiment of the present disclosure, the first network device may send the second reference signal configuration information to the terminal, and the second reference signal configuration information is used for the terminal to receive the reference signal sent from each block of the second network device.

In an embodiment of the present disclosure, the second reference signal configuration information may be the same as the first reference configuration information, or may be different from the first reference configuration information (for example, the second reference signal configuration information may not include the unit, in each block, occupied by the reference signal sent from each block).

Optionally, the second reference signal configuration information may include at least one of: generation information of a sequence of the reference signal sent from each block; an antenna port number occupied by the reference signal sent from each block; or a time-frequency resource occupied by the reference signal sent from each block.

It may be understood that in the first reference signal configuration information in step 302 and the second reference signal configuration information in step 303, basic information (the generation information of the sequence of the reference signal, the antenna port number occupied by the reference signal, and the time-frequency resource occupied by the reference signal) of the reference signal sent from each block are the same, and the terminal may receive, according to the second reference signal configuration information, the reference signal sent by the second network device according to the first reference signal configuration information.

It should be noted that the channel used by the first network device to send the reference signal configuration information to the terminal may be a channel that passes through the second network device, or it may be a line of sight channel that does not pass through the second network device, which is not limited herein.

In step 304, channel feedback information sent by the terminal is received.

In the embodiment of the present disclosure, the first network device may receive the channel feedback information sent by the terminal. The channel feedback information is determined by the terminal according to the reference signal sent from each block of the second network device.

The channel feedback information may reflect a state of a channel between each block of the second network device and the terminal. The first network device may determine first indication information for determining a phase shift matrix for the second network device according to the channel feedback information.

In some embodiments, the channel feedback information includes: a plurality of third PMIs and an index of a reference signal corresponding to each third PMI. The third PMI indicates a precoding matrix for the channel between each block of the second network device and the terminal.

It may be understood that each block of the second network device may send a reference signal, and the terminal receives the reference signal sent from each block and estimates the signal to obtain the precoding matrix of the channel between each block and the terminal. The precoding matrix of the channel between each block and the terminal is indicated by one third PMI, and the reference signal sent by the block is indicated by the index of the reference signal corresponding to the third PMI.

In some embodiments, the first network device may send first reference signal configuration information to the second network device according to the unit arrangement information and the block information. The first reference signal configuration information is used to determine the reference signal sent from each block of the second network device.

Optionally, the first reference signal configuration information may include at least one of: a unit, in each block, occupied by the reference signal sent from each block; generation information of a sequence of the reference signal sent from each block; an antenna port number occupied by the reference signal sent from each block; or a time-frequency resource occupied by the reference signal sent from each block.

It should be noted that, similarly, the channel used by the first network device to receive the channel feedback information sent by the terminal may be a channel that passes through the second network device, or may be a line of sight channel that does not pass through the second network device, which is not limited herein.

In step 305, position information of the terminal relative to the second network device is determined according to the channel feedback information, the unit arrangement information and the block information.

In the embodiment of the present disclosure, the first network device may determine the position information of the terminal relative to the second network device based on the channel feedback information, the unit arrangement information and the block information, and determine the first indication information according to the position information.

Optionally, the position information may be represented by coordinates. The first network device and the second network device may establish a coordinate system through a coordinate axis establishment method specified in the protocol, and obtain coordinates of the terminal in the coordinate system. The first network device and the second network device may also negotiate and determine the coordinate axis establishment method for the coordinate system through signaling.

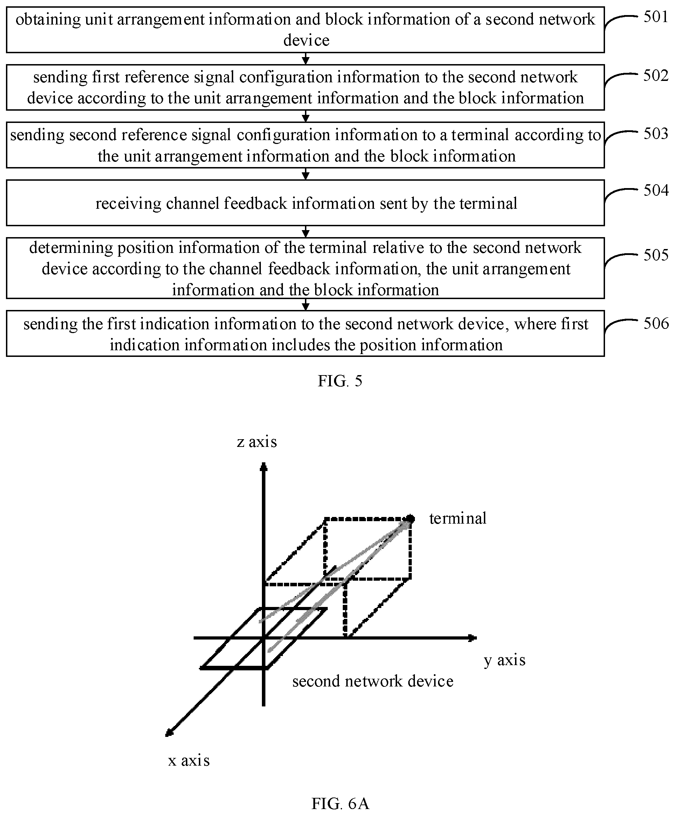

Optionally, in various embodiments of the present disclosure, the first network device may use a variety of methods to determine the position information of the terminal relative to the second network device according to the channel feedback information, the unit arrangement information and the block information of the second network device. An example is shown in FIGS. 6A to 6C, details will be described below and will not be described in detail here.

In step 306, the first precoding matrix is determined according to the unit arrangement information, the block information, the position information, and angle information between the first network device and the second network device.

In the embodiment of the present disclosure, the first network device may determine the first precoding matrix according to the unit arrangement information, and the block information of the second network device, the position information of the terminal relative to the second network device, and the angle information between the first network device and the second network device. The second network device may determine the phase shift matrix according to the first precoding matrix, and adjust the phase of each unit of the second network device to implement the precoding of the second network device.

Optionally, the first precoding matrix may be a near-field precoding matrix for the second network device.

In an embodiments of the present disclosure, the angle information between the first network device and the second network device may be departure angle information or incident angle information. The departure angle information refers to information of a departure angle of the signal emitted by the first network device. The incident angle information refers to information of an incident angle of the signal emitted by the first network device and incident on the surface of the second network device.

In step 307, the first indication information is sent to the second network device, where the first indication information includes the first precoding matrix or the first information.

In the embodiment of the present disclosure, after the first network device calculates the first precoding matrix in step 306, it may send the first indication information to the second network device according to the first precoding matrix. The first indication information includes the first precoding matrix or the first information. The first information is used to indicate the first precoding matrix.

In the embodiment of the present disclosure, the first indication information may be used to determine the phase shift matrix for the second network device, that is, the second network device may determine the phase shift matrix according to the first indication information. The phase shift matrix is used to configure the phase of each unit of the second network device, that is, to realize the precoding for the second network device. The second network device may adjust the phase of each unit of the second network device according to the phase shift matrix configuration to implement the precoding for the second network device, and may reflect or transmit signal(s) incident on the surface of the second network device.

Optionally, the first information may be an index of the first precoding matrix, or may be a first PMI used to indicate the first precoding matrix, or the like.

In summary, by obtaining the unit arrangement information and the block information of the second network device, sending the first reference signal configuration information to the second network device, sending the second reference signal configuration information to the terminal, receiving the channel feedback information sent by the terminal, determining the position information of the terminal relative to the second network device according to the channel feedback information, the unit arrangement information and the block information, determining the first precoding matrix according to the unit arrangement information, the block information, the position information and the angle information between the first network device and the second network device, and sending the first indication information to the second network device, where the first indication information includes the first precoding matrix or the first information, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

Referring to FIG. 4, FIG. 4 is a flow chart illustrating a method for precoding based on an RIS according to embodiments of the present disclosure. It should be noted that the method for precoding based on the RIS in the embodiments of the present disclosure is performed by the first network device. This method may be performed independently or in conjunction with any other embodiment of the present disclosure. As shown in FIG. 4, the method may include the following steps.

In step 401, unit arrangement information and block information of a second network device are obtained.

It should be noted that in various embodiments of the present disclosure, the second network device may be an RIS.

In the embodiment of the present disclosure, the first network device may obtain the unit arrangement information and the block information of the second network device. The block information of the second network device indicates the plurality of blocks of the second network device. The unit arrangement information of the second network device indicates arrangement of the units in the second network device.

It should be noted that each block of the second network device is a continuous part of the second network device, such as a continuous surface of the RIS.

It may be understood that the first network device may determine how the units of the second network device are arranged by obtaining the unit arrangement information of the second network device. The first network device may determine individual blocks of the second network device by obtaining the block information of the second network device.

In some embodiments, the unit arrangement information may include at least one of: a numeric count of rows of units of the second network device; a numeric count of columns of units of the second network device; a row spacing of units of the second network device; a column spacing of units of the second network device; or a unit capable of sending a reference signal in the second network device (may also be an active unit in the second network device).

In some embodiments, the block information may include at least one of: a numeric count of rows of units included in each block; a numeric count of columns of units included in each block; or a unit at a center of each block.

It may be understood that the unit arrangement information and the block information of the second network device may be flexibly configured according to a specific shape of the second network device. For example, if the shape of the second network device is circular, the unit arrangement information of the second network device may include a radius or diameter of the second network device, and the block information may further include other information to indicate each block of the second network device.

In an embodiment of the present disclosure, the first network device may receive the unit arrangement information and/or the block information reported by the second network device, or the first network device may obtain the unit arrangement information and/or the block information of the second network device during an offline phase.

In some embodiments, the first network device may configure the plurality of blocks of the second network device according to the unit arrangement information of the second network device, and obtain the block information of the second network device.

In an embodiment of the present disclosure, each block of the second network device may send a reference signal.

In step 402, first reference signal configuration information is sent to the second network device according to the unit arrangement information and the block information.

In the embodiment of the present disclosure, the first network device may send the first reference signal configuration information to the second network device according to the unit arrangement information and the block information. The first reference signal configuration information is used to determine the reference signal sent from each block of the second network device. The second network device may determine the reference signal sent from each block according to the first reference signal configuration information.

Optionally, the first reference signal configuration information includes at least one of: a unit, in each block, occupied by the reference signal sent from each block; generation information of a sequence of the reference signal sent from each block; an antenna port number occupied by the reference signal sent from each block; or a time-frequency resource occupied by the reference signal sent from each block.

In step 403, second reference signal configuration information is sent to the terminal according to the unit arrangement information and the block information.

In the embodiment of the present disclosure, the first network device may send the second reference signal configuration information to the terminal, and the second reference signal configuration information is used for the terminal to receive the reference signal sent from each block of the second network device.

In an embodiment of the present disclosure, the second reference signal configuration information may be the same as the first reference configuration information, or may be different from the first reference configuration information (for example, the second reference signal configuration information may not include the unit, in each block, occupied by the reference signal sent from each block).

Optionally, the second reference signal configuration information may include at least one of: generation information of a sequence of the reference signal sent from each block; an antenna port number occupied by the reference signal sent from each block; or a time-frequency resource occupied by the reference signal sent from each block.

It may be understood that in the first reference signal configuration information in step 302 and the second reference signal configuration information in step 303, basic information (the generation information of the sequence of the reference signal, the antenna port number occupied by the reference signal, and the time-frequency resource occupied by the reference signal) of the reference signal sent from each block are the same, and the terminal may receive, according to the second reference signal configuration information, the reference signal sent by the second network device according to the first reference signal configuration information.

It should be noted that the channel used by the first network device to send the reference signal configuration information to the terminal may be a channel that passes through the second network device, or it may be a line of sight channel that does not pass through the second network device, which is not limited herein.

In step 404, channel feedback information sent by the terminal is received.

In the embodiment of the present disclosure, the first network device may receive the channel feedback information sent by the terminal. The channel feedback information is determined by the terminal according to the reference signal sent from each block of the second network device.

The channel feedback information may reflect a state of a channel between each block of the second network device and the terminal. The first network device may determine first indication information for determining a phase shift matrix for the second network device according to the channel feedback information.

In some embodiments, the channel feedback information includes: a plurality of third PMIs and an index of a reference signal corresponding to each third PMI. The third PMI indicates a precoding matrix for the channel between each block of the second network device and the terminal.

It may be understood that each block of the second network device may send a reference signal, and the terminal receives the reference signal sent from each block and estimates the signal to obtain the precoding matrix of the channel between each block and the terminal. The precoding matrix of the channel between each block and the terminal is indicated by one third PMI, and the reference signal sent by the block is indicated by the index of the reference signal corresponding to the third PMI.

In some embodiments, the first network device may send first reference signal configuration information to the second network device according to the unit arrangement information and the block information. The first reference signal configuration information is used to determine the reference signal sent from each block of the second network device.

Optionally, the first reference signal configuration information may include at least one of: a unit, in each block, occupied by the reference signal sent from each block; generation information of a sequence of the reference signal sent from each block; an antenna port number occupied by the reference signal sent from each block; or a time-frequency resource occupied by the reference signal sent from each block.

It should be noted that, similarly, the channel used by the first network device to receive the channel feedback information sent by the terminal may be a channel that passes through the second network device, or may be a line of sight channel that does not pass through the second network device, which is not limited herein.

In step 405, position information of the terminal relative to the second network device is determined according to the channel feedback information, the unit arrangement information and the block information.

In the embodiment of the present disclosure, the first network device may determine the position information of the terminal relative to the second network device based on the channel feedback information, the unit arrangement information and the block information, and determine the first indication information according to the position information.

Optionally, the position information may be represented by coordinates. The first network device and the second network device may establish a coordinate system through a coordinate axis establishment method specified in the protocol, and obtain coordinates of the terminal in the coordinate system. The first network device and the second network device may also negotiate and determine the coordinate axis establishment method for the coordinate system through signaling.

Optionally, in various embodiments of the present disclosure, the first network device may use a variety of methods to determine the position information of the terminal relative to the second network device according to the channel feedback information, the unit arrangement information and the block information of the second network device. An example is shown in FIGS. 6A to 6C, details will be described below and will not be described in detail here.

In step 406, the second precoding matrix is determined according to the unit arrangement information, the block information, and the position information.

In the embodiment of the present disclosure, the first network device may determine the second precoding matrix according to the unit arrangement information and the block information of the second network device, and the position information of the terminal relative to the second network device. The second network device may determine the phase shift matrix according to the second precoding matrix and angle information between the first network device and the second network device, and adjust the phase of each unit of the second network device to implement the precoding of the second network device.

Optionally, the second precoding matrix may be a near-field precoding matrix for the second network device.

In step 407, the first indication information is sent to the second network device, where the first indication information includes the second precoding matrix or the second information.

In the embodiment of the present disclosure, after the first network device calculates the second precoding matrix in step 406, it may send the first indication information to the second network device according to the second precoding matrix. The first indication information includes the second precoding matrix or the second information. The second information is used to indicate the second precoding matrix.

In the embodiment of the present disclosure, the first indication information may be used to determine the phase shift matrix for the second network device, that is, the second network device may determine the phase shift matrix according to the second indication information and the angle information between the first network device and the second network device. The phase shift matrix is used to configure the phase of each unit of the second network device, that is, to realize the precoding for the second network device. The second network device may adjust the phase of each unit of the second network device according to the phase shift matrix configuration to implement the precoding for the second network device, and may reflect or transmit signal(s) incident on the surface of the second network device.

Optionally, the first information may be an index of the second precoding matrix, or may be a second PMI used to indicate the second precoding matrix, or the like.

In some embodiments, the first network device may send the angle information between the first network device and the second network device to the second network device.

In summary, by obtaining the unit arrangement information and the block information of the second network device, sending the first reference signal configuration information to the second network device, sending the second reference signal configuration information to the terminal, receiving the channel feedback information sent by the terminal, determining the position information of the terminal relative to the second network device according to the channel feedback information, the unit arrangement information and the block information, determining the second precoding matrix according to the unit arrangement information, the block information, and the position information, and sending the first indication information to the second network device, where the first indication information includes the second precoding matrix or the second information, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

Referring to FIG. 5, FIG. 5 is a flow chart illustrating a method for precoding based on an RIS according to embodiments of the present disclosure. It should be noted that the method for precoding based on the RIS in the embodiments of the present disclosure is performed by the first network device. This method may be performed independently or in conjunction with any other embodiment of the present disclosure. As shown in FIG. 5, the method may include the following steps.

In step 501, unit arrangement information and block information of a second network device are obtained.

In step 502, first reference signal configuration information is sent to the second network device according to the unit arrangement information and the block information.

In step 503, second reference signal configuration information is sent to the terminal according to the unit arrangement information and the block information.

In step 504, channel feedback information sent by a terminal is received.

In step 505, position information of the terminal relative to the second network device is determined according to the channel feedback information, the unit arrangement information and the block information.

In an embodiment of the present disclosure, each of steps 501 to 505 may be implemented in any manner of the embodiments of the present disclosure, which is not limited herein and will not be described here again.

In step 506, the first indication information is sent to the second network device, where the first indication information includes the position information.

In the embodiment of the present disclosure, after determining the position information of the terminal relative to the second network device in step 505, the first network device may send the first indication information to the second network device according to the position information, where the first indication information includes the position information.

In the embodiment of the present disclosure, the first indication information may be used to determine the phase shift matrix for the second network device, that is, the second network device may determine the phase shift matrix according to the position information, its own unit arrangement information and block information, and the angle information between the first network device and the second network device. The phase shift matrix is used to configure the phase of each unit of the second network device, that is, to realize the precoding for the second network device. The second network device may adjust the phase of each unit of the second network device according to the phase shift matrix configuration to implement the precoding for the second network device, and may reflect or transmit signal(s) incident on the surface of the second network device.

In some embodiments, the first network device may further send angle information between the first network device and the second network device to the second network device.

In summary, by obtaining the unit arrangement information and the block information of the second network device, sending the first reference signal configuration information to the second network device, sending the second reference signal configuration information to the terminal, receiving the channel feedback information sent by the terminal, determining the position information of the terminal relative to the second network device according to the channel feedback information, the unit arrangement information and the block information, and sending the first indication information to the second network device, where the first indication information includes the position information, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

As mentioned above, in various embodiments of the present disclosure, the first network device may use a variety of methods to determine the position of the terminal relative to the second network device according to the channel feedback information, the unit arrangement information and the block information of the second network device.

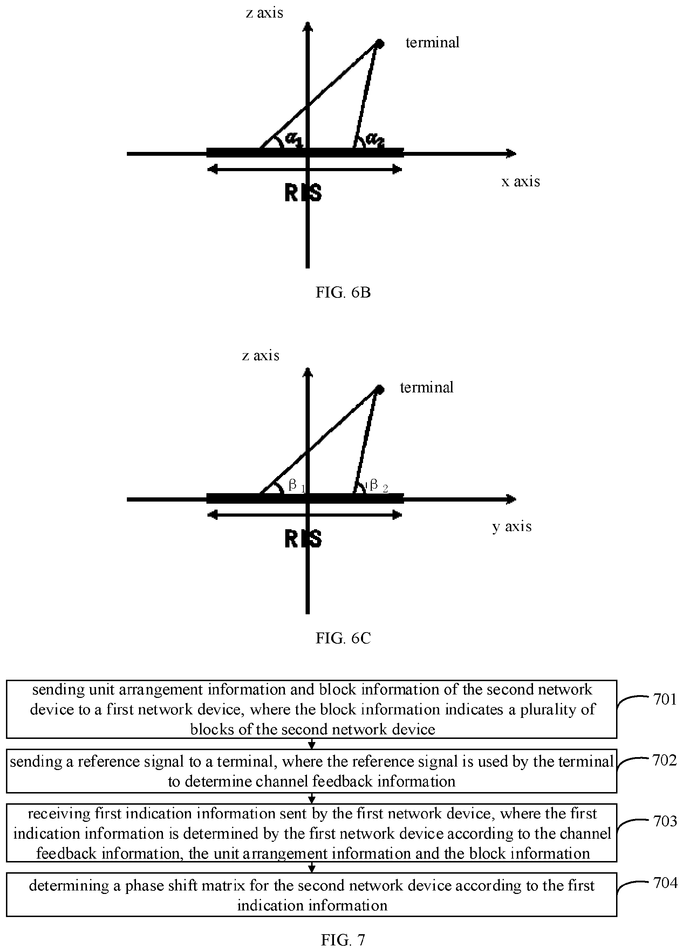

FIG. 6A to FIG. 6C are referred to as examples. FIG. 6A is a schematic diagram illustrating spatial positions of a terminal and a second network device provided according to embodiments of the present disclosure. FIG. 6B is a schematic diagram in a plan of x and z axes. FIG. 6C is a schematic diagram in a plan of y and z axes.

FIG. 6A is an example, illustrating a method of establishing coordinate axes, and other methods of establishing coordinate axes may also be used to establish a coordinate system. As shown in FIG. 6A, a plane of x and y axes is established according to a plane where the second network device is positioned. A normal direction of the second network device is alone z axis. The second network device has four blocks.

Viewed from the y axis direction in FIG. 6A, the second network device is divided into two blocks in the x axis direction, one block at a left side of the z axis and one block at a right side of the z axis (as shown in FIG. 6B). With the third PMI corresponding to each block of the second network device, horizontal dimension (a dimension corresponding to the x axis) direction angles $\alpha_1$, $\alpha_2$ corresponding to individual blocks of the second network device may be obtained.

With a horizontal distance between individual blocks of the second network device, and angles $\alpha_1$, $\alpha_2$, a horizontal position of the terminal may be determined. Assuming that the distance between the two blocks of the second network device is d, and coordinates of the terminal in the x-z plane are $(d_x, d_z)$,

$$d_x = d_z \frac{1}{\tan(\alpha_1)} - \frac{d}{2}, \quad d_z = \frac{d}{\frac{1}{\tan(\alpha_1)} - \frac{1}{\tan(\alpha_2)}}.$$

Similarly, viewed from the x axis direction in FIG. 6A, the second network device is divided into two blocks in the y axis direction, one block at a left side of the z axis and one block at a right side of the z axis (as shown in FIG. 6C). With the third PMI corresponding to each block of the second network device, vertical dimension (a dimension corresponding to the y axis) direction angles $\beta_1$, $\beta_2$ corresponding to individual blocks of the second network device may be obtained.

With a vertical distance between individual blocks of the second network device, and angles $\beta_1$, $\beta_2$, a vertical position of the terminal may be determined. Assuming that the distance between the two blocks of the second network device is d', and coordinates of the terminal in the y-z plane are $(d_y, d_z)$,

$$d_y = d_z \frac{1}{\tan(\beta_1)} - \frac{d\prime}{2}, \quad d_z = \frac{d\prime}{\frac{1}{\tan(\beta_1)} - \frac{1}{\tan(\beta_2)}}.$$

Further, according to the coordinates of the terminal in the x-z plane and the y-z plane, the coordinates of the terminal in the coordinate system are obtained, thereby obtaining the position of the terminal relative to the second network device.

It may be understood that the above method of determining the position information of the terminal relative to the second network device is only shown as an example. The first network device may also adopt other methods. The position of the terminal relative to the second network device is determined according to the channel feedback information sent by the terminal, the unit arrangement information and the block information of the second network device.

Referring to FIG. 7, FIG. 7 is a flow chart illustrating a method for precoding based on an RIS according to embodiments of the present disclosure. It should be noted that the method for precoding based on the RIS in the embodiments of the present disclosure is performed by a second network device. This method may be performed independently or in conjunction with any other embodiment of the present disclosure. As shown in FIG. 7, the method may include the following steps.

In step 701, unit arrangement information and block information of the second network device are sent to a first network device. The block information indicates a plurality of blocks of the second network device.

It should be noted that in various embodiments of the present disclosure, the second network device may be an RIS.

In the embodiment of the present disclosure, the second network device may send the unit arrangement information and the block information of the second network device to the first network device. The block information of the second network device indicates the plurality of blocks of the second network device. The unit arrangement information of the second network device indicates arrangement of the units in the second network device.

It should be noted that each block of the second network device is a continuous part of the second network device, such as a continuous surface of the RIS.

It may be understood that the first network device may determine how the units of the second network device are arranged by obtaining the unit arrangement information of the second network device. The first network device may determine individual blocks of the second network device by obtaining the block information of the second network device.

In some embodiments, the unit arrangement information may include at least one of: a numeric count of rows of units of the second network device; a numeric count of columns of units of the second network device; a row spacing of units of the second network device; a column spacing of units of the second network device; or a unit capable of sending a reference signal in the second network device (may also be an active unit in the second network device).

In some embodiments, the block information may include at least one of: a numeric count of rows of units included in each block; a numeric count of columns of units included in each block; or a unit at a center of each block.

It may be understood that the unit arrangement information and the block information of the second network device may be flexibly configured according to a specific shape of the second network device. For example, if the shape of the second network device is circular, the unit arrangement information of the second network device may include a radius or diameter of the second network device, and the block information may include other information to indicate each block of the second network device.

In step 702, a reference signal is sent to a terminal. The reference signal is used by the terminal to determine channel feedback information.

In the embodiment of the present disclosure, the second network device is capable of sending the reference signal. The reference signal is used by the terminal to determine the channel feedback information.

In an embodiment of the present disclosure, each block of the second network device may send a reference signal. That is, the terminal may receive the reference signal sent from each block of the second network device and determine the channel feedback information according to the received reference signal(s).

The channel feedback information may reflect a state of a channel between each block of the second network device and the terminal. The first network device may determine, according to the channel feedback information, first indication information for determining a phase shift matrix for the second network device.

In some embodiments, the channel feedback information includes: a plurality of third PMIs and an index of a reference signal corresponding to each third PMI. The third PMI indicates a precoding matrix for the channel between each block of the second network device and the terminal.

It may be understood that each block of the second network device is capable of sending a reference signal, and the terminal receives the reference signal sent from each block and estimates the signal to obtain the precoding matrix for the channel between each block and the terminal. The precoding matrix of the channel between each block and the terminal is indicated by one third PMI, and the reference signal sent by the block is indicated by the index of the reference signal corresponding to the third PMI.

In some embodiments, the second network device may receive first reference signal configuration information sent by the first network device, and the second network device may determine the reference signal sent from each block of the second network device according to the first reference signal configuration information.

Optionally, the first reference signal configuration information may include at least one of: a unit, in each block, occupied by the reference signal sent from each block; generation information of a sequence of the reference signal sent from each block; an antenna port number occupied by the reference signal sent from each block; or a time-frequency resource occupied by the reference signal sent from each block.

In step 703, first indication information sent by the first network device is received. The first indication information is determined by the first network device according to the channel feedback information, the unit arrangement information and the block information.

In the embodiment of the present disclosure, the second network device may receive the first indication information sent by the first network device, and determine a phase shift matrix for the second network device according to the first indication information. The first indication information is determined by the first network device according to the channel feedback information, the unit arrangement information and the block information.

The phase shift matrix for the second network device is used to configure a phase of each unit of the second network device, that is, to realize precoding for the second network device. The second network device may adjust the phase of each unit of the second network device according to the phase shift matrix configuration to implement the precoding for the second network device.

In the embodiment of the present disclosure, the first indication information is determined by the terminal according to position information of the terminal relative to the second network device. The position information is determined by the first network device according to the channel feedback information, the unit arrangement information and the block information.

In some embodiments, the first indication information includes a first precoding matrix or first information, where the first information indicates a first precoding matrix. The first precoding matrix is determined by the first network device according to the unit arrangement information, the block information, the position information, and angle information between the first network device and the second network device.

Optionally, the first information may be an index of the first precoding matrix, or may be a first PMI used to indicate the first precoding matrix, or the like.

In some embodiments, the first indication information includes a second precoding matrix or second information, where the second information indicates a second precoding matrix. The second precoding matrix is determined by the first network device according to the unit arrangement information, the block information, and the position information.

Optionally, the second information may be an index of the second precoding matrix, or may be a second PMI used to indicate the second precoding matrix, or the like.

In some embodiments, the first indication information includes the position information.

In an embodiments of the present disclosure, the angle information between the first network device and the second network device may be departure angle information or incident angle information. The departure angle information refers to information of a departure angle of the signal emitted by the first network device. The incident angle information refers to information of an incident angle of the signal emitted by the first network device and incident on the surface of the second network device.

In some embodiments, optionally, the second network device may receive angle information between the first network device and the second network device sent by the first network device. It is also possible for the second network device to sense the angle information itself, and thus transmission of the first network device is not needed.

In the embodiment of the present disclosure, the second network device may determine, according to pre-provisions of the protocol or the configuration instruction of the first network device, whether the angle information between the first network device and the second network device is considered for determination of the first indication information.

In step 704, a phase shift matrix for the second network device is determined according to the first indication information.

In the embodiment of the present disclosure, the second network device is capable of determining the phase shift matrix according to the received first indication information, and adjust a phase of an individual unit of the second network device according to the phase shift matrix to realize the precoding for the second network device.

In some embodiments, the first indication information includes a first precoding matrix or first information, where the first information indicates a first precoding matrix. The second network device may determine the first precoding matrix according to the first indication information and determine the phase shift matrix according to the first precoding matrix.

In some embodiments, the first indication information includes a second precoding matrix or second information, where the second information indicates a second precoding matrix. The second network device may determine the second precoding matrix according to the first indication information and determine the phase shift matrix according to the second precoding matrix and angle information between the first network device and the second network device.

In some embodiments, the first indication information includes the position information. The second network device may determine the position information according to the first indication information, and determine the phase shift matrix according to the position information, the unit arrangement information and the block information of the second network device, and the angle information between the first network device and the second network device.

In the embodiment of the present disclosure, after determining the phase shift matrix, the second network device may configure and adjust the phase of each unit of the second network device according to the phase shift matrix, and the signal incident on the surface of the second network device may reflected or transmitted according to the adjusted phase.

It should be noted that the first precoding matrix or the second precoding matrix is generated based on that the phase of each unit of the second network device is continuously adjustable. That is, the phase of each unit of the second network device configured according to the reference phase shift matrix not be supported by the second network device. Therefore, the second network device may perform quantization according to a phase offset value it supports to obtain the phase shift matrix for the second network device.

In summary, by sending the unit arrangement information and the block information of the second network device to the first network device, where the block information indicates the plurality of blocks of the second network device, and sending the reference signal to the terminal, where the reference signal is used by the terminal to determine the channel feedback information, receiving the first indication information sent by the first network device, where the first indication information is determined by the first network device according to the channel feedback information, the unit arrangement information and the block information, and determining the phase shift matrix for the second network device according to the first indication information, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

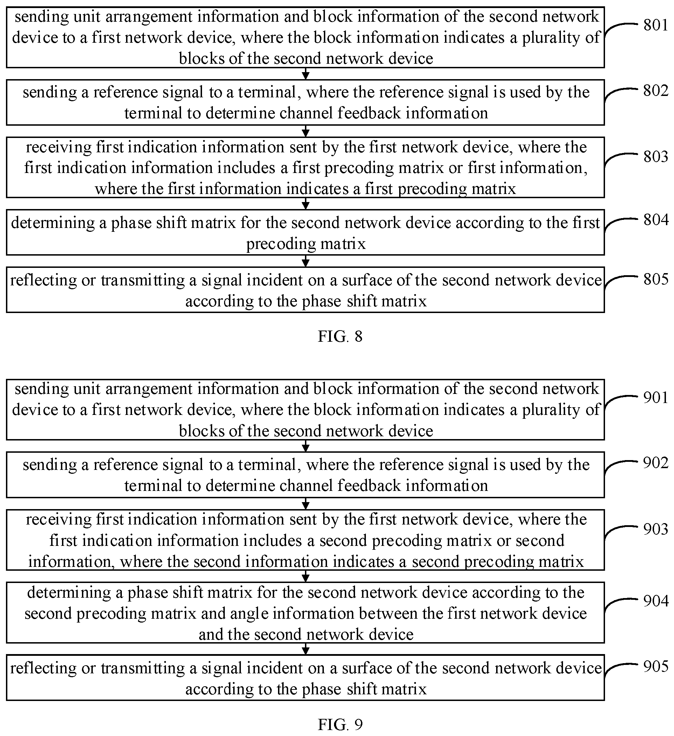

Referring to FIG. 8, FIG. 8 is a flow chart illustrating a method for precoding based on an RIS according to embodiments of the present disclosure. It should be noted that the method for precoding based on the RIS in the embodiments of the present disclosure is performed by a second network device. This method may be performed independently or in conjunction with any other embodiment of the present disclosure. As shown in FIG. 8, the method may include the following steps.

In step 801, unit arrangement information and block information of the second network device are sent to a first network device. The block information indicates a plurality of blocks of the second network device.

It should be noted that in various embodiments of the present disclosure, the second network device may be an RIS.

In the embodiment of the present disclosure, the second network device may send the unit arrangement information and the block information of the second network device to the first network device. The block information of the second network device indicates the plurality of blocks of the second network device. The unit arrangement information of the second network device indicates arrangement of the units in the second network device.

It should be noted that each block of the second network device is a continuous part of the second network device, such as a continuous surface of the RIS.

It may be understood that the first network device may determine how the units of the second network device are arranged by obtaining the unit arrangement information of the second network device. The first network device may determine individual blocks of the second network device by obtaining the block information of the second network device.

In some embodiments, the unit arrangement information may include at least one of: a numeric count of rows of units of the second network device; a numeric count of columns of units of the second network device; a row spacing of units of the second network device; a column spacing of units of the second network device; or a unit capable of sending a reference signal in the second network device (may also be an active unit in the second network device).

In some embodiments, the block information may include at least one of: a numeric count of rows of units included in each block; a numeric count of columns of units included in each block; or a unit at a center of each block.

It may be understood that the unit arrangement information and the block information of the second network device may be flexibly configured according to a specific shape of the second network device. For example, if the shape of the second network device is circular, the unit arrangement information of the second network device may include a radius or diameter of the second network device, and the block information may include other information to indicate each block of the second network device.

In step 802, a reference signal is sent to a terminal. The reference signal is used by the terminal to determine channel feedback information.

In the embodiment of the present disclosure, the second network device is capable of sending the reference signal. The reference signal is used by the terminal to determine the channel feedback information.

In an embodiment of the present disclosure, each block of the second network device may send a reference signal. That is, the terminal may receive the reference signal sent from each block of the second network device and determine the channel feedback information according to the received reference signal(s).

The channel feedback information may reflect a state of a channel between each block of the second network device and the terminal. The first network device may determine, according to the channel feedback information, first indication information for determining a phase shift matrix for the second network device.

In some embodiments, the channel feedback information includes: a plurality of third PMIs and an index of a reference signal corresponding to each third PMI. The third PMI indicates a precoding matrix for the channel between each block of the second network device and the terminal.

It may be understood that each block of the second network device is capable of sending a reference signal, and the terminal receives the reference signal sent from each block and estimates the signal to obtain the precoding matrix for the channel between each block and the terminal. The precoding matrix of the channel between each block and the terminal is indicated by one third PMI, and the reference signal sent by the block is indicated by the index of the reference signal corresponding to the third PMI.

In some embodiments, the second network device may receive first reference signal configuration information sent by the first network device, and the second network device may determine the reference signal sent from each block of the second network device according to the first reference signal configuration information.

Optionally, the first reference signal configuration information may include at least one of: a unit, in each block, occupied by the reference signal sent from each block; generation information of a sequence of the reference signal sent from each block; an antenna port number occupied by the reference signal sent from each block; or a time-frequency resource occupied by the reference signal sent from each block.

In step 803, first indication information sent by the first network device is received. The first indication information includes a first precoding matrix or first information, where the first information indicates a first precoding matrix.

In the embodiment of the present disclosure, the second network device may receive the first indication information sent by the first network device, and determine the phase shift matrix for the second network device according to the first indication information.

In the embodiment of the present disclosure, the first indication information includes a first precoding matrix or first information, where the first information indicates a first precoding matrix.

Optionally, the first information may be an index of the first precoding matrix, or may be a first PMI used to indicate the first precoding matrix, or the like.

Optionally, the first precoding matrix may be a near-field precoding matrix for the second network device.

In an embodiment, the first precoding matrix is determined by the first network device according to the unit arrangement information, the block information, the position information of the terminal relative to the second network device, and angle information between the first network device and the second network device.

The position information is determined by the first network device according to the channel feedback information, the unit arrangement information, and the block information.

Optionally, the position information is represented by coordinates. The first network device and the second network device may establish a coordinate system by a coordinate axis establishment method specified in the protocol, and obtain the coordinates of the terminal in the coordinate system. The first network device and the second network device may also negotiate and determine the coordinate axis establishment method for the coordinate system through signaling.

In an embodiment of the present disclosure, the angle information between the first network device and the second network device may be departure angle information or incident angle information. The departure angle information refers to information of a departure angle of the signal emitted by the first network device. The incident angle information refers to information of an incident angle of the signal emitted by the first network device and incident on the surface of the second network device.

In step 804, the phase shift matrix for the second network device is determined according to the first precoding matrix.

In the embodiment of the present disclosure, the second network device may determine the first precoding matrix according to the received first indication information, determine the phase shift matrix according to the first precoding matrix, and configure and adjust the phase of each unit according to the phase shift matrix to realize the precoding based on the RIS.

It should be noted that the first precoding matrix or the second precoding matrix is generated based on that the phase of each unit of the second network device is continuously adjustable. That is, the phase of each unit of the second network device configured according to the reference phase shift matrix not be supported by the second network device. Therefore, the second network device may perform quantization according to a phase offset value it supports to obtain the phase shift matrix for the second network device.

In step 805, a signal incident on a surface of the second network device is reflected or transmitted according to the phase shift matrix.

In the embodiment of the present disclosure, after determining the phase shift matrix, the second network device may configure and adjust the phase of each unit of the second network device according to the phase shift matrix, and the signal incident on the surface of the second network device may reflected or transmitted according to the adjusted phase.

In summary, by sending the unit arrangement information and the block information of the second network device to the first network device, where the block information indicates the plurality of blocks of the second network device, sending the reference signal to the terminal, where the reference signal is used by the terminal to determine the channel feedback information, receiving the first indication information sent by the first network device, where the first indication information includes the first precoding matrix or the first information, and determining the phase shift matrix for the second network device according to the first precoding matrix, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

Referring to FIG. 9, FIG. 9 is a flow chart illustrating a method for precoding based on an RIS according to embodiments of the present disclosure. It should be noted that the method for precoding based on the RIS in the embodiments of the present disclosure is performed by a second network device. This method may be performed independently or in conjunction with any other embodiment of the present disclosure. As shown in FIG. 9, the method may include the following steps.

In step 901, unit arrangement information and block information of the second network device are sent to a first network device. The block information indicates a plurality of blocks of the second network device.

In step 902, a reference signal is sent to a terminal. The reference signal is used by the terminal to determine channel feedback information.

In an embodiment of the present disclosure, each of steps 901 to 902 may be implemented in any manner of the embodiments of the present disclosure, which is not limited herein and will not be described here again.

In step 903, first indication information sent by the first network device is received. The first indication information includes a second precoding matrix or second information, where the second information indicates a second precoding matrix.

In the embodiment of the present disclosure, the second network device may receive the first indication information sent by the first network device, and determine the phase shift matrix for the second network device according to the first indication information.

In the embodiment of the present disclosure, the first indication information includes the second precoding matrix or the second information, where the second information indicates the second precoding matrix.

Optionally, the second information may be an index of the second precoding matrix, or may be a second PMI used to indicate the second precoding matrix, or the like.

Optionally, the second precoding matrix may be a near-field precoding matrix for the second network device.

In an embodiment, the second precoding matrix is determined by the first network device according to the unit arrangement information, the block information, and the position information of the terminal relative to the second network device.

The position information is determined by the first network device according to the channel feedback information, the unit arrangement information, and the block information.

Optionally, the position information is represented by coordinates. The first network device and the second network device may establish a coordinate system by a coordinate axis establishment method specified in the protocol, and obtain the coordinates of the terminal in the coordinate system. The first network device and the second network device may also negotiate and determine the coordinate axis establishment method for the coordinate system through signaling.

In step 904, the phase shift matrix for the second network device is determined according to the second precoding matrix and the angle information between the first network device and the second network device.

In the embodiment of the present disclosure, the second network device may determine the second precoding matrix according to the received first indication information, determine the phase shift matrix according to the second precoding matrix and the angle information between the first network device and the second network device, and configure and adjust the phase of each unit according to the phase shift matrix to realize the precoding based on the RIS.

In the embodiment of the present disclosure, after determining the phase shift matrix, the first network device may configure and adjust the phase of each unit of the first network device according to the phase shift matrix, and the signal incident on the surface of the first network device may reflected or transmitted according to the adjusted phase.

In an embodiment of the present disclosure, the angle information between the first network device and the second network device may be departure angle information or incident angle information. The departure angle information refers to information of a departure angle of the signal emitted by the first network device. The incident angle information refers to information of an incident angle of the signal emitted by the first network device and incident on the surface of the second network device.

Optionally, the second network device may receive the angle information between the first network device and the second network device sent by the first network device. It is also possible for the second network device to sense the angle information itself, and thus transmission of the first network device is not needed.

In step 905, a signal incident on a surface of the second network device is reflected or transmitted according to the phase shift matrix.

In the embodiment of the present disclosure, after determining the phase shift matrix, the second network device may configure and adjust the phase of each unit of the second network device according to the phase shift matrix, and the signal incident on the surface of the second network device may reflected or transmitted according to the adjusted phase.

In summary, by sending the unit arrangement information and the block information of the second network device to the first network device, where the block information indicates the plurality of blocks of the second network device, sending the reference signal to the terminal, where the reference signal is used by the terminal to determine the channel feedback information, receiving the first indication information sent by the first network device, where the first indication information includes the second precoding matrix or the second information, and determining the phase shift matrix for the second network device according to the second precoding matrix, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

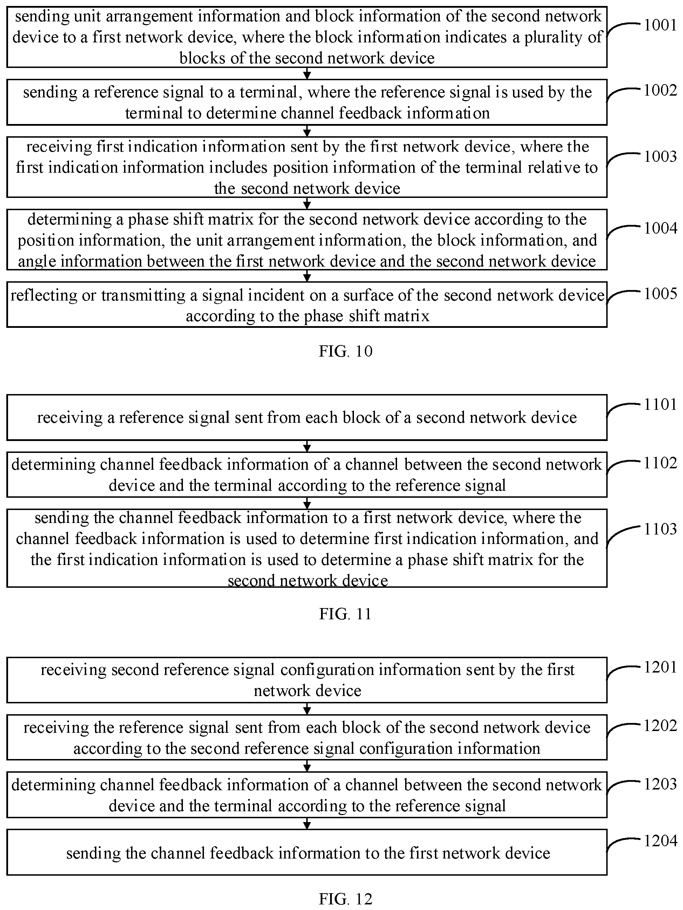

Referring to FIG. 10, FIG. 10 is a flow chart illustrating a method for precoding based on an RIS according to embodiments of the present disclosure. It should be noted that the method for precoding based on the RIS in the embodiments of the present disclosure is performed by a second network device. This method may be performed independently or in conjunction with any other embodiment of the present disclosure. As shown in FIG. 10, the method may include the following steps.

In step 1001, unit arrangement information and block information of the second network device are sent to a first network device. The block information indicates a plurality of blocks of the second network device.

In step 1002, a reference signal is sent to a terminal. The reference signal is used by the terminal to determine channel feedback information.

In an embodiment of the present disclosure, each of steps 1001 to 1002 may be implemented in any manner of the embodiments of the present disclosure, which is not limited herein and will not be described here again.

In step 1003, first indication information sent by the first network device is received. The first indication information includes position information of the terminal relative to the second network device.

In the embodiment of the present disclosure, the second network device may receive the first indication information sent by the first network device, and determine the phase shift matrix for the second network device according to the first indication information.

In the embodiment of the present disclosure, the first indication information includes the position information of the terminal relative to the second network device. The position information is determined by the first network device according to the channel feedback information, the unit arrangement information, and the block information.

In an embodiment, the second precoding matrix is determined by the first network device according to the unit arrangement information, the block information, and the position information of the terminal relative to the second network device.

Optionally, the position information is represented by coordinates. The first network device and the second network device may establish a coordinate system by a coordinate axis establishment method specified in the protocol, and obtain the coordinates of the terminal in the coordinate system. The first network device and the second network device may also negotiate and determine the coordinate axis establishment method for the coordinate system through signaling. The second network device may determine and utilize the position of the terminal according to the coordinate system and the coordinates of the terminal.

In step 1004, the phase shift matrix for the second network device is determined according to the position information, the unit arrangement information, the block information, and angle information between the first network device and the second network device.

In the embodiment of the present disclosure, the second network device may determine the position information of the terminal relative to the second network device according to the received first indication information, determine the phase shift matrix according to the position information, the unit arrangement information, the block information, and the angle information between the first network device and the second network device, and configure and adjust the phase of each unit according to the phase shift matrix to realize the precoding based on the RIS.

In the embodiment of the present disclosure, after determining the phase shift matrix, the first network device may configure and adjust the phase of each unit of the first network device according to the phase shift matrix, and the signal incident on the surface of the first network device may reflected or transmitted according to the adjusted phase.

In an embodiment of the present disclosure, the angle information between the first network device and the second network device may be departure angle information or incident angle information. The departure angle information refers to information of a departure angle of the signal emitted by the first network device. The incident angle information refers to information of an incident angle of the signal emitted by the first network device and incident on the surface of the second network device.

Optionally, the second network device may receive the angle information between the first network device and the second network device sent by the first network device. It is also possible for the second network device to sense the angle information itself, and thus transmission of the first network device is not needed.

In step 1005, a signal incident on a surface of the second network device is reflected or transmitted according to the phase shift matrix.

In the embodiment of the present disclosure, after determining the phase shift matrix, the second network device may configure and adjust the phase of each unit of the second network device according to the phase shift matrix, and the signal incident on the surface of the second network device may reflected or transmitted according to the adjusted phase.

In summary, by sending the unit arrangement information and the block information of the second network device to the first network device, where the block information indicates the plurality of blocks of the second network device, sending the reference signal to the terminal, where the reference signal is used by the terminal to determine the channel feedback information, receiving the first indication information sent by the first network device, where the first indication information includes the second precoding matrix or the second information, and determining the phase shift matrix for the second network device according to the position information, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

Referring to FIG. 11, FIG. 11 is a flow chart illustrating a method for precoding based on an RIS according to embodiments of the present disclosure. It should be noted that the method for precoding based on the RIS in the embodiments of the present disclosure is performed by a terminal. This method may be performed independently or in conjunction with any other embodiment of the present disclosure. As shown in FIG. 11, the method may include the following steps.

In step 1101, a reference signal sent from each block of a second network device is received.

In the embodiment of the present disclosure, the terminal may receive the reference signal sent from each block of the second network device, and perform channel estimation according to the reference signal. The reference signal is sent by the second network device according to first reference signal configuration information sent by the first network device.

It should be noted that in various embodiments of the present disclosure, the second network device may be an RIS.

In some embodiments, the terminal may receive second reference signal configuration information sent by the first network device, and receive the reference signal sent by the second network device according to the second reference signal configuration information.

Optionally, the second reference signal configuration information may include at least one of: generation information of a sequence of the reference signal sent from each block; an antenna port number occupied by the reference signal sent from each block; or a time-frequency resource occupied by the reference signal sent from each block.

It should be noted that the channel used by the terminal to receive the reference signal configuration information sent by the first network device may be a channel that passes through the second network device, or it may be a line of sight channel that does not pass through the second network device, which is not limited herein.

In step 1102, channel feedback information of a channel between the second network device and the terminal is determined according to the reference signal.

In the embodiment of the present disclosure, the terminal may obtain the channel feedback information of the channel by estimating the channel between the second network device and the terminal according to the reference signal.

The channel feedback information may reflect a state of a channel between each block of the second network device and the terminal. The first network device may determine first indication information for determining a phase shift matrix for the second network device according to the channel feedback information.

In some embodiments, the channel feedback information includes: a plurality of third PMIs and an index of a reference signal corresponding to each third PMI. The third PMI indicates a precoding matrix for the channel between each block of the second network device and the terminal.

It may be understood that each block of the second network device may send a reference signal, and the terminal receives the reference signal sent from each block and estimates the signal to obtain the precoding matrix of the channel between each block and the terminal. The precoding matrix of the channel between each block and the terminal is indicated by one third PMI, and the reference signal sent by the block is indicated by the index of the reference signal corresponding to the third PMI.

It should be noted that the terminal may estimate the channel according to the received reference signal. A least squares (LS) method, a minimum mean square error (MMSE) method or any other estimation algorithm may be used for the estimation, which is not limited herein.

In step 1103, the channel feedback information is sent to a first network device. The channel feedback information is used to determine first indication information, and the first indication information is used to determine a phase shift matrix for the second network device.

In the embodiment of the present disclosure, after the terminal estimates the channel between the first network device and the terminal and obtains the channel feedback information of the channel, it may send the channel feedback information to the second network device.

The channel feedback information is used to determine the first indication information, and the first indication information is used to determine the phase shift matrix for the second network device.

In some embodiments, the channel feedback information may be used to determine the position information of the terminal relative to the second network device, and the first network device may determine the first indication information according to the position information.

In some embodiments, the first indication information includes a first precoding matrix or first information, where the first information indicates a first precoding matrix.

Optionally, the first information may be an index of the first precoding matrix, or may be a first PMI used to indicate the first precoding matrix, or the like.

In some embodiments, the first indication information includes a second precoding matrix or second information, where the second information indicates a second precoding matrix.

Optionally, the second information may be an index of the second precoding matrix, or may be a second PMI used to indicate the second precoding matrix, or the like.

In some embodiments, the first indication information includes the position information.

It should be noted that the channel used by the terminal to send the channel feedback information to the first network device may be a channel that passes through the second network device, or it may be a line of sight channel that does not pass through the second network device, which is not limited herein.

In summary, by receiving the reference signal sent by each block of the second network device, determining the channel feedback information of the channel between the second network device and the terminal according to the reference signal, and sending the channel feedback information to the first network device, where the channel feedback information is used to determine the first indication information, and the first indication information is used to determine the phase shift matrix for the second network device, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

Referring to FIG. 12, FIG. 12 is a flow chart illustrating a method for precoding based on an RIS according to embodiments of the present disclosure. It should be noted that the method for precoding based on the RIS in the embodiments of the present disclosure is performed by a terminal. This method may be performed independently or in conjunction with any other embodiment of the present disclosure. As shown in FIG. 12, the method may include the following steps.

In step 1201, second reference signal configuration information sent by the first network device is received.

In some embodiments, the terminal may receive second reference signal configuration information sent by the first network device, and receive the reference signal sent from each unit of the second network device according to the second reference signal configuration information.

Optionally, the second reference signal configuration information may include at least one of: generation information of a sequence of the reference signal sent from each block; an antenna port number occupied by the reference signal sent from each block; or a time-frequency resource occupied by the reference signal sent from each block.

It should be noted that the channel used by the terminal to receive the reference signal configuration information sent by the first network device may be a channel that passes through the second network device, or it may be a line of sight channel that does not pass through the second network device, which is not limited herein.

In step 1202, the reference signal sent from each block of the second network device is received according to the second reference signal configuration information.

In the embodiment of the present disclosure, the terminal may receive the reference signal sent from each block of the second network device according to the received second reference signal configuration information.

The reference signal sent by the second network device is determined according to the first reference signal configuration information.

Optionally, the first reference signal configuration information includes at least one of: a unit, in each block, occupied by the reference signal sent from each block; generation information of a sequence of the reference signal sent from each block; an antenna port number occupied by the reference signal sent from each block; or a time-frequency resource occupied by the reference signal sent from each block.

It may be understood that basic information (the generation information of the sequence of the reference signal, the antenna port number occupied by the reference signal, and the time-frequency resource occupied by the reference signal) of the reference signal sent from each block in the first reference signal configuration information and the second reference signal configuration information are the same, and the terminal may receive, according to the second reference signal configuration information, the reference signal sent by the second network device according to the first reference signal configuration information.

In step 1203, channel feedback information of a channel between the second network device and the terminal is determined according to the reference signal.

In the embodiment of the present disclosure, the terminal may obtain the channel feedback information of the channel by estimating the channel between the second network device and the terminal according to the reference signal.

The channel feedback information may reflect a state of a channel between each block of the second network device and the terminal. The first network device may determine first indication information for determining a phase shift matrix for the second network device according to the channel feedback information.

In some embodiments, the channel feedback information includes: a plurality of third PMIs and an index of a reference signal corresponding to each third PMI. The third PMI indicates a precoding matrix for the channel between each block of the second network device and the terminal.

It may be understood that each block of the second network device may send a reference signal, and the terminal receives the reference signal sent from each block and estimates the signal to obtain the precoding matrix of the channel between each block and the terminal. The precoding matrix of the channel between each block and the terminal is indicated by one third PMI, and the reference signal sent by the block is indicated by the index of the reference signal corresponding to the third PMI.

It should be noted that the terminal may estimate the channel according to the received reference signal. A least squares (LS) method, a minimum mean square error (MMSE) method or any other estimation algorithm may be used for the estimation, which is not limited herein.

In step 1204, the channel feedback information is sent to a first network device.

In the embodiment of the present disclosure, after the terminal estimates the channel between the first network device and the terminal and obtains the channel feedback information of the channel, it may send the channel feedback information to the second network device.

The channel feedback information is used to determine the first indication information, and the first indication information is used to determine the phase shift matrix for the second network device.

In some embodiments, the channel feedback information may be used to determine the position information of the terminal relative to the second network device, and the first network device may determine the first indication information according to the position information.

In some embodiments, the first indication information includes a first precoding matrix or first information, where the first information indicates a first precoding matrix.

Optionally, the first information may be an index of the first precoding matrix, or may be a first PMI used to indicate the first precoding matrix, or the like.

In some embodiments, the first indication information includes a second precoding matrix or second information, where the second information indicates a second precoding matrix.

Optionally, the second information may be an index of the second precoding matrix, or may be a second PMI used to indicate the second precoding matrix, or the like.

In some embodiments, the first indication information includes the position information.

It should be noted that the channel used by the terminal to send the channel feedback information to the first network device may be a channel that passes through the second network device, or it may be a line of sight channel that does not pass through the second network device, which is not limited herein.

In summary, by receiving the second reference signal configuration information sent by the first network device, receiving the reference signal sent from each block of the second network device according to the second reference signal configuration information, and determining the channel feedback information of the channel between the second network device and the terminal, and sending the channel feedback information to the first network device, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

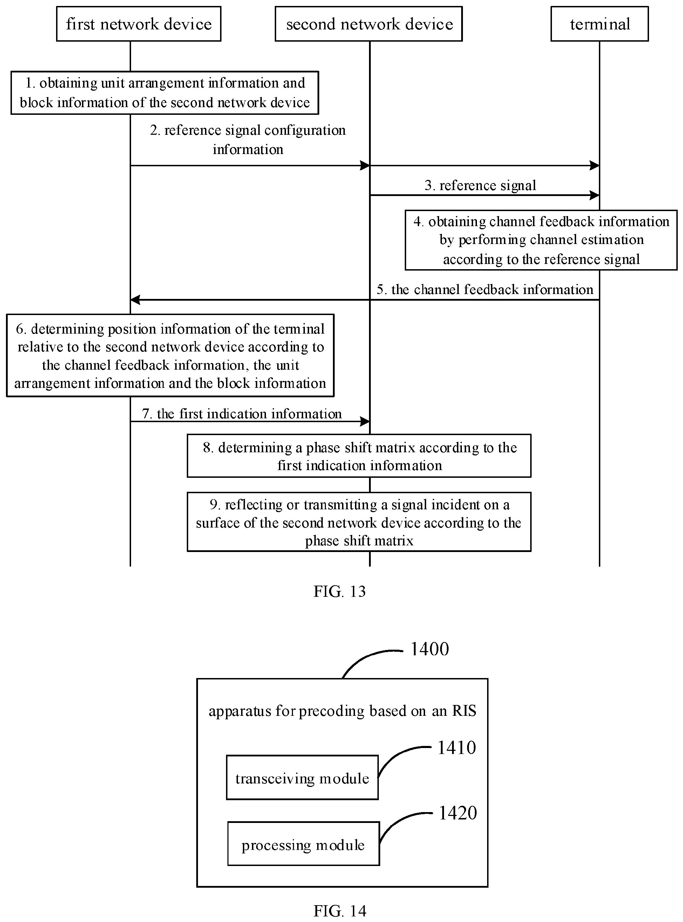

FIG. 13 is a flow chart illustrating a method for precoding based on an RIS according to embodiments of the present disclosure. This method can be performed independently or in conjunction with any other embodiment of the present disclosure. As shown in FIG. 13, the method may include the following steps.

1. The first network device obtains the unit arrangement information and the block information of the second network device. The block information indicates a plurality of blocks of the second network device.
2. The first network device sends the first reference signal configuration information and the second reference signal configuration information to the second network device and the terminal, respectively.
In the embodiment of the present disclosure, the second reference signal configuration information may be the same as the first reference configuration information, or may be different from the first reference configuration information (for example, the second reference signal configuration information may not include the unit, in each block, occupied by the reference signal sent from each block).
3. The second network device sends the reference signal to the terminal according to the reference signal configuration information. The terminal receives the reference signal sent by the second network device according to the reference signal configuration information.
4. The terminal estimates the channel between the second network device and the terminal according to the reference signal, and obtains the channel feedback information.
5. The channel feedback information is sent to the first network device.
6. The first network device determines the position information of the terminal relative to the second network device according to the channel feedback information, the unit arrangement information and the block information.
7. The first indication information is determined according to the position information, and the first network device sends the first indication information to the second network device.

In some embodiments, the first indication information includes a first precoding matrix or first information, where the first information indicates a first precoding matrix. The first precoding matrix is determined by the first network device according to the unit arrangement information, the block information, the position information, and the angle information between the first network device and the second network device.

In some embodiments, the first indication information includes a second precoding matrix or second information, where the second information indicates a second precoding matrix. The second precoding matrix is determined by the first network device according to the unit arrangement information, the block information and the position information.

In some embodiments, the first indication information includes the position information.

8. The second network device determines the phase shift matrix according to the first indication information.
9. The second network device reflects or transmits the signal incident on the surface of the second network device according to the phase shift matrix.

In summary, with the method for precoding based on the RIS provided by the embodiments of the present disclosure, the units of the second network device may be divided into multiple groups, and the far-field hypothesis is true for each group. Meanwhile, complexity of the precoding based on the RIS is effectively reduced, a communication efficiency of the RIS -assisted communication system is improved, and interference is reduced.

Corresponding to the method for precoding based on the RIS provided in the above embodiments, the present disclosure further provides an apparatus for precoding based on an RIS. Since the apparatus for precoding based on the RIS provided in the embodiments of the present disclosure is in line with the method provided by the above embodiments. Therefore, implementations of the method for precoding based on the RIS are also applicable to the apparatus for precoding based on the RIS provided in the following embodiments, which will not be detailed in the following embodiments.

Referring to FIG. 14, FIG. 14 is a block diagram illustrating an apparatus for precoding based on an RIS according to embodiments of the present disclosure.

As shown in FIG. 14, the apparatus 1400 for precoding based on the RIS includes: a transceiving module 1410 and a processing module 1420. The transceiving module 1410 is configured to obtain unit arrangement information and block information of a second network device, where the block information indicates a plurality of blocks of the second network device, and the transceiving module 1410 is further configured to receive channel feedback information sent by a terminal, where the channel feedback information is determined by the terminal according to a reference signal sent from each block of the second network device. The processing module 1420 is configured to determine first indication information according to the channel feedback information, the unit arrangement information and the block information, where the first indication information is used to determine a phase shift matrix for the second network device. The transceiving module 1410 is further configured to send the first indication information to the second network device.

Optionally, the processing module 1420 is further configured to: determine position information of the terminal relative to the second network device according to the channel feedback information, the unit arrangement information and the block information; and determine the first indication information according to the position information.

Optionally, the first indication information includes the position information, and the position information is used by the second network device to determine the phase shift matrix.

Optionally, the first indication information includes a first precoding matrix or first information, where the first information indicates a first precoding matrix. The processing module 1420 is further configured to determine the first precoding matrix according to the unit arrangement information, the block information, the position information, and angle information between the first network device and the second network device.

Optionally, the first indication information includes a second precoding matrix or second information, where the second information indicates a second precoding matrix. The processing module 1420 is further configured to determine the second precoding matrix according to the unit arrangement information, the block information and the position information.

Optionally, the transceiving module 1410 is further configured to send angle information between the first network device and the second network device to the second network device.

Optionally, the transceiving module 1410 is further configured to send first reference signal configuration information to the second network device according to the unit arrangement information and the block information. The first reference signal configuration information is used to determine the reference signal sent from each block of the second network device.

Optionally, the first reference signal configuration information includes at least one of: a unit, in each block, occupied by the reference signal sent from each block; generation information of a sequence of the reference signal sent from each block; an antenna port number occupied by the reference signal sent from each block; or a time-frequency resource occupied by the reference signal sent from each block.

Optionally, the transceiving module 1410 is further configured to send second reference signal configuration information to the terminal according to the unit arrangement information and the block information. The second reference signal configuration information is used for the terminal to receive the reference signal sent from each block of the second network device.

Optionally, the second reference signal configuration information includes at least one of: generation information of a sequence of the reference signal sent from each block; an antenna port number occupied by the reference signal sent from each block; or a time-frequency resource occupied by the reference signal sent from each block.

Optionally, the channel feedback information includes: a plurality of third precoding matrix indicators (PMIs) and an index of a reference signal corresponding to each third PMI. The third PMI indicates a precoding matrix for a channel between each block of the second network device and the terminal.

Optionally, the unit arrangement information of the second network device includes at least one of: a numeric count of rows of units of the second network device; a numeric count of columns of units of the second network device; a row spacing of units of the second network device; a column spacing of units of the second network device; or a unit, in the second network device, capable of sending a reference signal.

Optionally, the block information of the second network device includes at least one of: a numeric count of rows of units included in each block; a numeric count of columns of units included in each block; or a unit at a center of each block.

Optionally, the second network device is an RIS.

Optionally, the phase shift matrix is used by the second network device to reflect or transmit a signal incident on a surface of the second network device.

With the apparatus for precoding based on the RIS, by obtaining the unit arrangement information and the block information of the second network device, where the block information indicates the plurality of blocks of the second network device, receiving the channel feedback information sent by the terminal, determining the first indication information according to the channel feedback information, the unit arrangement information and the block information, where the first indication information is used to determine the phase shift matrix for the second network device, and sending the first indication information to the second network device, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

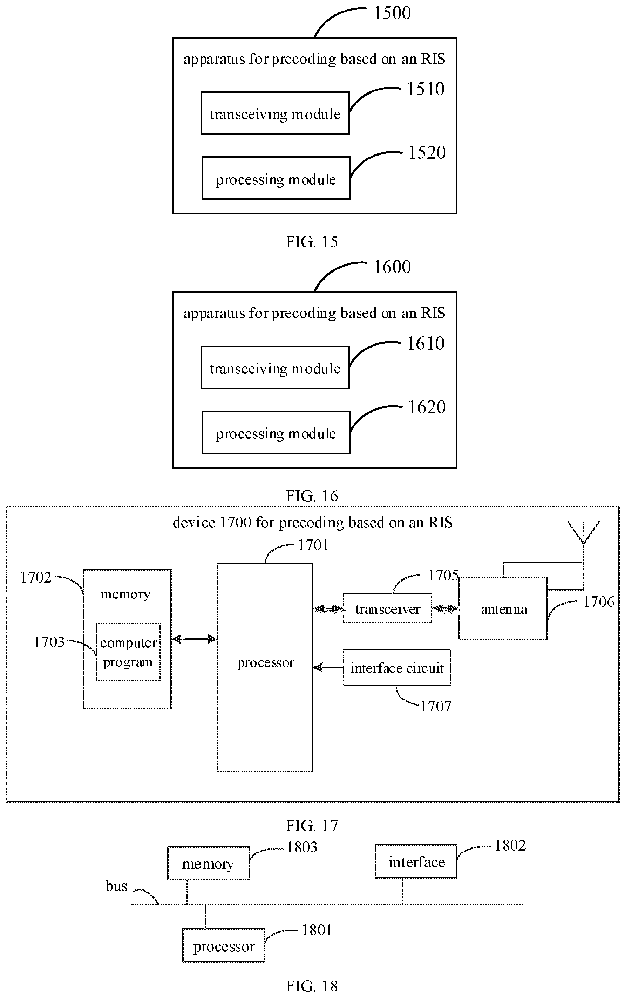

Referring to FIG. 15, FIG. 15 is a block diagram illustrating an apparatus for precoding based on an RIS according to embodiments of the present disclosure.

As shown in FIG. 15, the apparatus 1500 for precoding based on the RIS includes: a transceiving module 1510 and a processing module 1520. The transceiving module 1510 is configured to send unit arrangement information and block information of a second network device to a first network device, where the block information indicates a plurality of blocks of the second network device, the transceiving module 1510 is further configured to send a reference signal to a terminal, where the reference signal is used by the terminal to determine channel feedback information, and the transceiving module 1510 is further configured to receive first indication information sent by the first network device, where the first indication information is determined by the first network device according to the channel feedback information, the unit arrangement information and the block information. The processing module 1520 is configured to determine a phase shift matrix for the second network device according to the first indication information.

Optionally, the first indication information is determined according to position information of the terminal relative to the second network device, and the position information is determined by the first network device according to the channel feedback information, the unit arrangement information and the block information.

Optionally, the first indication information includes the position information of the terminal relative to the second network device. Determining the phase shift matrix for the second network device according to the first indication information includes: determining the phase shift matrix for the second network device according to the position information, the unit arrangement information and the block information.

Optionally, the first indication information includes a first precoding matrix or first information, where the first information indicates a first precoding matrix. The processing module 1520 is further configured to determine the phase shift matrix for the second network device according to the first precoding matrix. The first precoding matrix is determined according to the unit arrangement information, the block information, the position information of the terminal relative to the second network device, and angle information between the first network device and the second network device.

Optionally, the first indication information includes a second precoding matrix or second information, where the second information indicates a second precoding matrix. The processing module 1520 is further configured to determine the phase shift matrix for the second network device according to the second precoding matrix and angle information between the first network device and the second network device. The second precoding matrix is determined according to the unit arrangement information, the block information, and the position information of the terminal relative to the second network device.

Optionally, the transceiving module 1510 is further configured to receive angle information between the first network device and the second network device sent by the first network device; or sense angle information between the first network device and the second network device sent by the first network device.

Optionally, the transceiving module 1510 is further configured to receive first reference signal configuration information sent by the first network device, and determine a reference signal sent from each block of the second network device according to the first reference signal configuration information.

Optionally, the first reference signal configuration information includes at least one of: a unit, in each block, occupied by the reference signal sent from each block; generation information of a sequence of the reference signal sent from each block; a port number occupied by the reference signal sent from each block; or a time-frequency resource occupied by the reference signal sent from each block.

Optionally, the channel feedback information includes: a plurality of third PMIs and an index of a reference signal corresponding to each third PMI. The third PMI indicates a precoding matrix for a channel between each block of the second network device and the terminal.

Optionally, the unit arrangement information of the second network device includes at least one of: a numeric count of rows of units of the second network device; a numeric count of columns of units of the second network device; a row spacing of units of the second network device; a column spacing of units of the second network device; or a unit, in the second network device, capable of sending a reference signal.

Optionally, the block information of the second network device includes at least one of: a numeric count of rows of units included in each block; a numeric count of columns of units included in each block; or a unit at a center of each block.

Optionally, the second network device is an RIS.

Optionally, the processing module 1520 is further configured to reflect or transmit a signal incident on a surface of the second network device according to the phase shift matrix.

With the apparatus for precoding based on the RIS, by sending the unit arrangement information and the block information of the second network device to the first network device, where the block information indicates the plurality of blocks of the second network device, and sending the reference signal to the terminal, where the reference signal is used by the terminal to determine the channel feedback information, receiving the first indication information sent by the first network device, where the first indication information is determined by the first network device according to the channel feedback information, the unit arrangement information and the block information, and determining the phase shift matrix for the second network device according to the first indication information, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

Referring to FIG. 16, FIG. 16 is a block diagram illustrating an apparatus for precoding based on an RIS according to embodiments of the present disclosure.

As shown in FIG. 16, the apparatus 1600 for precoding based on the RIS includes: a transceiving module 1610 and a processing module 1620. The transceiving module 1610 is configured to receive a reference signal sent from each block of a second network device. The processing module 1620 is configured to determine channel feedback information of a channel between the second network device and a terminal according to the reference signal. The transceiving module 1610 is further configured to send the channel feedback information to a first network device, where the channel feedback information is used to determine first indication information, and the first indication information is used to determine a phase shift matrix for the second network device.

Optionally, the transceiving module 1610 is further configured to receive second reference signal configuration information sent by the first network device; and receive the reference signal sent from each block of the second network device according to the second reference signal configuration information.

Optionally, the second reference signal configuration information includes at least one of: generation information of a sequence of the reference signal sent from each block; a port number occupied by the reference signal sent from each block; or a time-frequency resource occupied by the reference signal sent from each block.

Optionally, the channel feedback information includes: a plurality of third PMIs and an index of a reference signal corresponding to each third PMI. The third PMI indicates a precoding matrix for a channel between each block of the second network device and the terminal.

Optionally, the second network device is an RIS.

With the apparatus for precoding based on the RIS, by sending the unit arrangement information and the block information of the second network device to the first network device, where the block information indicates the plurality of blocks of the second network device, and sending the reference signal to the terminal, where the reference signal is used by the terminal to determine the channel feedback information, receiving the first indication information sent by the first network device, where the first indication information includes the second precoding matrix and the second information, and determining the phase shift matrix for the second network device according to the position information, the units of the second network device may be divided into multiple groups, and the far-field hypothesis is true for each group. Meanwhile, complexity of the precoding based on the RIS is effectively reduced, a communication efficiency of the RIS-assisted communication system is improved, and interference is reduced.

In order to implement the above embodiments, embodiments of the present disclosure further provide a communication device, including: a processor and a memory. A computer program is stored in the memory. The processor is configured to execute the computer program stored in the memory, to cause the device to perform the method as described in any embodiment of FIG. 2 to FIG. 5 or the method as described in any embodiment of FIG. 7 to FIG. 10.

In order to implement the above embodiments, embodiments of the present disclosure further provide a communication device, including: a processor and a memory. A computer program is stored in the memory. The processor is configured to execute the computer program stored in the memory, to cause the device to perform the method as described in any embodiment of FIG. 11 to FIG. 12.

In order to implement the above embodiments, embodiments of the present disclosure further provide a communication device, including: a processor and an interface circuit. The interface circuit is configured to receive code instructions and transmit them to the processor. The processor is configured to run the code instructions to perform the method as described in any embodiment of FIG. 2 to FIG. 5 or the method as described in any embodiment of FIG. 7 to FIG. 10.

In order to implement the above embodiments, embodiments of the present disclosure further provide a communication device, including: a processor and an interface circuit. The interface circuit is configured to receive code instructions and transmit them to the processor. The processor is configured to run the code instructions to perform the method as described in any embodiment of FIG. 11 to FIG. 12.

Referring to FIG. 17, FIG. 17 is a block diagram illustrating a device for precoding based on an RIS according to embodiments of the present disclosure. The device 1700 for precoding based on the RIS may be a network device or a terminal, or may be a chip, a chip system or a processor supporting the network device to implement the above-mentioned method, or a chip, a chip system or a processor supporting the terminal to implement the above-mentioned method. The device may be configured to implement the method as described in any of the method embodiments described above, with particular reference to the description of the method embodiments described above.

The device 1700 for precoding based on the RIS may include one or more processors 1701. The processor 1701 may be a general-purpose processor or a special-purpose processor, etc. It may be, for example, a baseband processor or a central processor. The baseband processor may be configured to process a communication protocol and communication data, and the central processor may be configured to control a communication device (such as a base station, a baseband chip, a terminal, a terminal chip, a DU or a CU, etc.), executing a computer program and processing data of the computer program.

Optionally, the device 1700 for precoding based on the RIS may further include one or more memories 1702 on which the computer program 1703 may be stored, and the processor 1701 executing the computer program 1703 to cause the device 1700 for precoding based on the RIS to perform the method as described in the above method embodiments. The computer program 1703 may be solidified in the processor 1701, and in this case the processor 1701 may be implemented by hardware.

Optionally, the memory 1702 may also have the data stored therein. The device 1700 for precoding based on the RIS and the memory 1702 may be provided independently or integrated together.

Optionally, the device 1700 for precoding based on the RIS may further include a transceiver 1705 and an antenna 1706. The transceiver 1705 may be referred to as a transceiving unit, a transceiver, or a transceiving circuit or the like for implementing a transceiving function. The transceiver 1705 may include a receiver and a transmitter, and the receiver may be referred to as a receiver or a receiving circuit or the like for implementing a receiving function; the transmitter may be referred to as a transmitter or a transmission circuit or the like for implementing a transmission function.

Optionally, the device 1700 for precoding based on the RIS may further include one or more interface circuits 1707. The interface circuit 1707 is configured to receive and transmit the code instruction to the processor 1701. The processor 1701 executes the code instruction to enable the device 1700 for precoding based on the RIS to perform the method described in any of the above method embodiments.

In an implementation, the processor 1701 may further include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiver circuit, interface or interface circuit may be configured for transmission or transfer of signal.

In an implementation, the device 1700 for precoding based on the RIS may include a circuit that may perform the functions of transmitting or receiving or communicating in the foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The device for precoding based on the RIS in the above embodiments may be the network device or the terminal, but the scope of the device for precoding based on the RIS described in the present disclosure is not limited thereto. Moreover, the structure of the device for precoding based on the RIS may not be limited by FIG. 14 to FIG. 16. The device for precoding based on the RIS may be a stand-alone device or may be a part of a larger device. For example, the communication device may be: (1) a stand-alone integrated circuit (IC), or a chip, or a chip system or a subsystem; (2) a set of one or more ICs, optionally the set of ICs may also include a storage component for storing the data and the computer program; (3) ASIC such as modem; (4) modules that may be embedded in other devices; (5) a receiver, a terminal, an intelligent terminal, a cellular phone, a wireless device, a handset, a mobile unit, an on-vehicle device, a network device, a cloud device, an artificial intelligence device, etc.; (6) others.

In a case where the device for precoding based on the RIS may be the chip or the chip system, reference is made to the block diagram of the chip shown in FIG. 18. The chip shown in FIG. 18 includes a processor 1801 and an interface 1802. There may be at least one processor 1801 and multiple interfaces 1802.

In a case where the chip is configured to implement the function of the network device in the embodiments of the present disclosure: the interface 1802 is configured to receive code instructions and transmit the code instructions to the processor, and the processor 1801 is configured to perform any method as shown in FIG. 2 to FIG. 5 or perform any method as shown in FIG. 7 to FIG. 10.

In a case where the chip is configured to implement the function of the terminal in the embodiments of the present disclosure: the interface 1802 is configured to receive code instructions and transmit the code instructions to the processor, and the processor 1801 is configured to perform any method as shown in FIG. 11 and FIG. 12.

Optionally, the chip further includes the memory 1803 for storing necessary computer programs and data.

Those skilled in the art may further appreciate that the various illustrative logical blocks and steps described in embodiments of the present disclosure may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be understood as exceeding the scope of protection of embodiments of the present disclosure.

Embodiments of the present disclosure further provide a communication system, which includes the apparatuses for precoding based on the RIS as the network devices and the apparatus for precoding based on the RIS as the terminal in the aforementioned embodiments of FIGS. 14-16, or the system includes the device for precoding based on the RIS as the terminal and the devices for precoding based on the RIS as the network devices in the aforementioned embodiments of FIG. 17.

The present disclosure further provides a readable storage medium for storing instructions that, when executed by a computer, cause the function of any of the method embodiments described above to be implemented.

The present disclosure further provides a computer program product that, when executed by a computer, causes the function of any of the method embodiments described above to be implemented.

In the above embodiments, the present disclosure may be implemented in whole or in part by the hardware, software, firmware or their combination. When implemented in the software, the present disclosure may be implemented in whole or in part as the computer program product. The computer program product includes one or more computer programs. The computer programs, when loaded and executed on the computer, result in whole or in part in processes or functions according to embodiments of the present disclosure. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present disclosure are merely for convenience of description and are not intended to limit the scope of embodiments of the present disclosure, which also represent a sequential order.

Term "at least one" in the present disclosure may also be described as one or more, and "a plurality of" may be two, three, four, or more, and the present disclosure is not limited thereto. In embodiments of the present disclosure, regarding one technical feature, the technical features in the technical feature are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present disclosure may be configured or predefined. Values of information in each table are merely examples, and may be configured as other values, which is not limited in the present disclosure. In a case of configuring the correspondence between the information and each parameter, it is not necessarily required that all the correspondences shown in each table must be configured. For example, the correspondence shown in certain rows in the tables in the present disclosure may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a structure, a class, a heap, a hash table or a hash table.

"Predefined" in the present disclosure may be understood as determined, predetermined, stored, pre-stored, pre-negotiated, pre-configured, cured, or pre-fired.

Those skilled in the art may appreciate that units and algorithm steps of each example described in conjunction with embodiments disclosed herein may be implemented with the electronic hardware, or combinations of the computer software and the electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present disclosure.

It will be clear to those skilled in the art that, for convenience and brevity of the description, specific working procedures of the above described systems, devices and units may be referred to corresponding procedures in the preceding method embodiments and will not be described in detail here.

It should be understood that the various forms of processes shown above may be used, with steps reordered, added or deleted. For example, the steps described in the embodiments of the present disclosure may be executed in parallel, sequentially, or in different orders as long as the desired result of the technical solution disclosed in the present disclosure may be achieved, which is not limited herein.

The above-mentioned specific embodiments do not constitute a limitation on the scope of the present disclosure. It will be understood by those skilled in the art that various modifications, combinations, sub-combinations and alternatives may be made based on design requirements and other factors. Any modifications, equivalent substitutions and improvements made within the spirit and the principle of the present disclosure shall be included in the protection scope of the present disclosure.

**Claims**

1. A method for precoding based on a reconfigurable intelligence surface (RIS), performed by a first network device, comprising:

   obtaining unit arrangement information and block information of a second network device, wherein the block information indicates a plurality of blocks of the second network device;
   receiving channel feedback information sent by a terminal, wherein the channel feedback information is determined by the terminal according to a reference signal sent from each block of the second network device;
   determining first indication information according to the channel feedback information, the unit arrangement information and the block information, wherein the first indication information is used to determine a phase shift matrix for the second network device; and
   sending the first indication information to the second network device.

2. The method according to claim 1, further comprising:

   determining position information of the terminal relative to the second network device according to the channel feedback information, the unit arrangement information and the block information; and
   determining the first indication information according to the position information.

3. The method according to claim 2, wherein the first indication information comprises the position information, and the position information is used by the second network device to determine the phase shift matrix.

4. The method according to claim 2, wherein the first indication information comprises a first precoding matrix or first information, where the first information indicates a first precoding matrix; and wherein determining the first indication information according to the position information comprises:
   determining the first precoding matrix according to the unit arrangement information, the block information, the position information, and angle information between the first network device and the second network device.

5. The method according to claim 2, wherein the first indication information comprises a second precoding matrix or second information, where the second information indicates a second precoding matrix; and wherein determining the first indication information according to the position information comprises:
   determining the second precoding matrix according to the unit arrangement information, the block information and the position information.

6. The method according to claim 3 or 5, further comprising:
   sending angle information between the first network device and the second network device to the second network device.

7. The method according to any one of claims 1 to 6, further comprising:

sending first reference signal configuration information to the second network device according to the unit arrangement information and the block information, wherein the first reference signal configuration information is used to determine the reference signal sent from each block of the second network device.

8. The method according to claim 7, wherein the first reference signal configuration information comprises at least one of:

a unit, in each block, occupied by the reference signal sent from each block;
generation information of a sequence of the reference signal sent from each block;
an antenna port number occupied by the reference signal sent from each block; or
a time-frequency resource occupied by the reference signal sent from each block.

9. The method according to claim 7, further comprising:
sending second reference signal configuration information to the terminal according to the unit arrangement information and the block information, wherein the second reference signal configuration information is used for the terminal to receive the reference signal sent from each block of the second network device.

10. The method according to claim 9, wherein the second reference signal configuration information comprises at least one of:

generation information of a sequence of the reference signal sent from each block;
an antenna port number occupied by the reference signal sent from each block; or
a time-frequency resource occupied by the reference signal sent from each block.

11. The method according to claim 9, wherein the channel feedback information comprises: a plurality of third precoding matrix indicators (PMIs) and an index of a reference signal corresponding to each third PMI,
wherein the third PMI indicates a precoding matrix for a channel between each block of the second network device and the terminal.

12. The method according to any one of claims 1 to 11, wherein the unit arrangement information of the second network device comprises at least one of:

a numeric count of rows of units of the second network device;
a numeric count of columns of units of the second network device;
a row spacing of units of the second network device;
a column spacing of units of the second network device; or
a unit, in the second network device, capable of sending a reference signal.

13. The method according to any one of claims 1 to 11, wherein the block information of the second network device comprises at least one of:

a numeric count of rows of units comprised in each block;
a numeric count of columns of units comprised in each block; or
a unit at a center of each block.

14. The method according to any one of claims 1 to 13, wherein the second network device is an RIS.

15. The method according to any one of claims 1 to 13, wherein the phase shift matrix is used by the second network device to reflect or transmit a signal incident on a surface of the second network device.

16. A method for precoding based on a reconfigurable intelligence surface (RIS), performed by a second network device, comprising:

sending unit arrangement information and block information of the second network device to a first network device, wherein the block information indicates a plurality of blocks of the second network device;
sending a reference signal to a terminal, wherein the reference signal is used by the terminal to determine channel feedback information;
receiving first indication information sent by the first network device, wherein the first indication information is determined by the first network device according to the channel feedback information, the unit arrangement information and the block information; and
determining a phase shift matrix for the second network device according to the first indication information.

17. The method according to claim 16, wherein the first indication information is determined according to position information of the terminal relative to the second network device, and the position information is determined by the first network device according to the channel feedback information, the unit arrangement information and the block information.

18. The method according to claim 17, wherein the first indication information comprises the position information of the terminal relative to the second network device, and determining the phase shift matrix for the second network device according to the first indication information comprises:
determining the phase shift matrix for the second network device according to the position information, the unit arrangement information and the block information.

19. The method according to claim 17, wherein the first indication information comprises a first precoding matrix or first information, where the first information indicates a first precoding matrix; and wherein determining the phase shift matrix for the second network device according to the first indication information comprises:

determining the phase shift matrix for the second network device according to the first precoding matrix, wherein the first precoding matrix is determined according to the unit arrangement information, the block information, the position information of the terminal relative to the second network device, and angle information between the first network device and the second network device.

20. The method according to claim 17, wherein the first indication information comprises a second precoding matrix or second information, where the second information indicates a second precoding matrix; and wherein determining the phase shift matrix for the second network device according to the first indication information comprises:

determining the phase shift matrix for the second network device according to the second precoding matrix and angle information between the first network device and the second network device, wherein the second precoding matrix is determined according to the unit arrangement information, the block information, and the position information of the terminal relative to the second network device.

21. The method according to claim 18 or 20, further comprising:

receiving angle information between the first network device and the second network device sent by the first network device; or
sensing angle information between the first network device and the second network device sent by the first network device.

22. The method according to any one of claims 16 to 21, further comprising:

receiving first reference signal configuration information sent by the first network device; and
determining a reference signal sent from each block of the second network device according to the first reference signal configuration information.

23. The method according to claim 22, wherein the first reference signal configuration information comprises at least one of:

a unit, in each block, occupied by the reference signal sent from each block;
generation information of a sequence of the reference signal sent from each block;
a port number occupied by the reference signal sent from each block; or
a time-frequency resource occupied by the reference signal sent from each block.

24. The method according to claim 16, wherein the channel feedback information comprises: a plurality of third precoding matrix indicators (PMIs) and an index of a reference signal corresponding to each third PMI, wherein the third PMI indicates a precoding matrix for a channel between each block of the second network device and the terminal.

25. The method according to any one of claims 16 to 24, wherein the unit arrangement information of the second network device comprises at least one of:

a numeric count of rows of units of the second network device;
a numeric count of columns of units of the second network device;
a row spacing of units of the second network device;
a column spacing of units of the second network device; or
a unit, in the second network device, capable of sending a reference signal.

26. The method according to any one of claims 16 to 24, wherein the block information of the second network device comprises at least one of:

a numeric count of rows of units comprised in each block;
a numeric count of columns of units comprised in each block; or
a unit at a center of each block.

27. The method according to any one of claims 16 to 26, wherein the second network device is an RIS.

28. The method according to any one of claims 16 to 26, further comprising:
reflecting or transmitting a signal incident on a surface of the second network device according to the phase shift matrix.

29. A method for precoding based on a reconfigurable intelligence surface (RIS), performed by a terminal, comprising:

receiving a reference signal sent from each block of a second network device;
determining channel feedback information of a channel between the second network device and the terminal according to the reference signal; and
sending the channel feedback information to a first network device, wherein the channel feedback information is used to determine first indication information, and the first indication information is used to determine a phase shift matrix for the second network device.

30. The method according to claim 29, further comprising:

receiving second reference signal configuration information sent by the first network device; and
receiving the reference signal sent from each block of the second network device according to the second reference signal configuration information.

31. The method according to claim 30, wherein the second reference signal configuration information comprises at least one of:

generation information of a sequence of the reference signal sent from each block;
a port number occupied by the reference signal sent from each block; or
a time-frequency resource occupied by the reference signal sent from each block.

32. The method according to claim 29, wherein the channel feedback information comprises: a plurality of third precoding matrix indicators (PMIs) and an index of a reference signal corresponding to each third PMI,
wherein the third PMI indicates a precoding matrix for a channel between each block of the second network device and the terminal.

33. The method according to any one of claims 29 to 32, wherein the second network device is an RIS.

34. An apparatus for precoding based on a reconfigurable intelligence surface (RIS), comprising:
a transceiving module configured to:

obtain unit arrangement information and block information of a second network device, wherein the block information indicates a plurality of blocks of the second network device, and
receive channel feedback information sent by a terminal, wherein the channel feedback information is determined by the terminal according to a reference signal sent from each block of the second network device; and

a processing module configured to determine first indication information according to the channel feedback information, the unit arrangement information and the block information, wherein the first indication information is used to determine a phase shift matrix for the second network device;

wherein the transceiving module is further configured to send the first indication information to the second network device.

35. An apparatus for precoding based on a reconfigurable intelligence surface (RIS), comprising:
a transceiving module configured to:

send unit arrangement information and block information of a second network device to a first network device, wherein the block information indicates a plurality of blocks of the second network device,

send a reference signal to a terminal, wherein the reference signal is used by the terminal to determine channel feedback information, and

receive first indication information sent by the first network device, wherein the first indication information is determined by the first network device according to the channel feedback information, the unit arrangement information and the block information; and

a processing module configured to determine a phase shift matrix for the second network device according to the first indication information.

36. An apparatus for precoding based on a reconfigurable intelligence surface (RIS), comprising:

a transceiving module configured to receive a reference signal sent from each block of a second network device; and

a processing module configured to determine channel feedback information of a channel between the second network device and a terminal according to the reference signal;

wherein the transceiving module is further configured to send the channel feedback information to a first network device, wherein the channel feedback information is used to determine first indication information, and the first indication information is used to determine a phase shift matrix for the second network device.

37. A communication system, comprising:

a first network device configured to perform the method according to any one of claims 1 to 15;
a second network device configured to perform the method according to any one of claims 16 to 28; and
a terminal configured to perform the method according to any one of claims 29 to 33.

second network device 102

first network device 101

terminal 103

FIG. 1

| obtaining unit arrangement information and block information of a second network device, where the block information indicates a plurality of blocks of the second network device | 201 |

| receiving channel feedback information sent by a terminal | 202 |

| determining first indication information according to the channel feedback information, the unit arrangement information and the block information, where the first indication information is used to determine a phase shift matrix for the second network device | 203 |

| sending the first indication information to the second network device | 204 |

FIG. 2

obtaining unit arrangement information and block information of a second network device — 301

sending first reference signal configuration information to the second network device according to the unit arrangement information and the block information — 302

sending second reference signal configuration information to a terminal according to the unit arrangement information and the block information — 303

receiving channel feedback information sent by the terminal — 304

determining position information of the terminal relative to the second network device according to the channel feedback information, the unit arrangement information and the block information — 305

determining a first precoding matrix according to the unit arrangement information, the block information, the position information, and angle information between the first network device and the second network device — 306

sending the first indication information to the second network device, where first indication information includes a first precoding matrix or first information — 307

FIG. 3

obtaining unit arrangement information and block information of a second network device — 401

sending first reference signal configuration information to the second network device according to the unit arrangement information and the block information — 402

sending second reference signal configuration information to a terminal according to the unit arrangement information and the block information — 403

receiving channel feedback information sent by the terminal — 404

determining position information of the terminal relative to the second network device according to the channel feedback information, the unit arrangement information and the block information — 405

determining a second precoding matrix according to the unit arrangement information, the block information, and the position information — 406

sending the first indication information to the second network device, where first indication information includes a second precoding matrix or second information — 407

FIG. 4

| obtaining unit arrangement information and block information of a second network device | 501 |

↓

| sending first reference signal configuration information to the second network device according to the unit arrangement information and the block information | 502 |

↓

| sending second reference signal configuration information to a terminal according to the unit arrangement information and the block information | 503 |

↓

| receiving channel feedback information sent by the terminal | 504 |

↓

| determining position information of the terminal relative to the second network device according to the channel feedback information, the unit arrangement information and the block information | 505 |

↓

| sending the first indication information to the second network device, where first indication information includes the position information | 506 |

FIG. 5

FIG. 6A

FIG. 6B

FIG. 6C

| | |
|---|---|
| sending unit arrangement information and block information of the second network device to a first network device, where the block information indicates a plurality of blocks of the second network device | 701 |
| sending a reference signal to a terminal, where the reference signal is used by the terminal to determine channel feedback information | 702 |
| receiving first indication information sent by the first network device, where the first indication information is determined by the first network device according to the channel feedback information, the unit arrangement information and the block information | 703 |
| determining a phase shift matrix for the second network device according to the first indication information | 704 |

FIG. 7

sending unit arrangement information and block information of the second network device to a first network device, where the block information indicates a plurality of blocks of the second network device — 801

sending a reference signal to a terminal, where the reference signal is used by the terminal to determine channel feedback information — 802

receiving first indication information sent by the first network device, where the first indication information includes a first precoding matrix or first information, where the first information indicates a first precoding matrix — 803

determining a phase shift matrix for the second network device according to the first precoding matrix — 804

reflecting or transmitting a signal incident on a surface of the second network device according to the phase shift matrix — 805

FIG. 8

sending unit arrangement information and block information of the second network device to a first network device, where the block information indicates a plurality of blocks of the second network device — 901

sending a reference signal to a terminal, where the reference signal is used by the terminal to determine channel feedback information — 902

receiving first indication information sent by the first network device, where the first indication information includes a second precoding matrix or second information, where the second information indicates a second precoding matrix — 903

determining a phase shift matrix for the second network device according to the second precoding matrix and angle information between the first network device and the second network device — 904

reflecting or transmitting a signal incident on a surface of the second network device according to the phase shift matrix — 905

FIG. 9

sending unit arrangement information and block information of the second network device to a first network device, where the block information indicates a plurality of blocks of the second network device ⌐ 1001

↓

sending a reference signal to a terminal, where the reference signal is used by the terminal to determine channel feedback information ⌐ 1002

↓

receiving first indication information sent by the first network device, where the first indication information includes position information of the terminal relative to the second network device ⌐ 1003

↓

determining a phase shift matrix for the second network device according to the position information, the unit arrangement information, the block information, and angle information between the first network device and the second network device ⌐ 1004

↓

reflecting or transmitting a signal incident on a surface of the second network device according to the phase shift matrix ⌐ 1005

FIG. 10

receiving a reference signal sent from each block of a second network device ⌐ 1101

↓

determining channel feedback information of a channel between the second network device and the terminal according to the reference signal ⌐ 1102

↓

sending the channel feedback information to a first network device, where the channel feedback information is used to determine first indication information, and the first indication information is used to determine a phase shift matrix for the second network device ⌐ 1103

FIG. 11

receiving second reference signal configuration information sent by the first network device ⌐ 1201

↓

receiving the reference signal sent from each block of the second network device according to the second reference signal configuration information ⌐ 1202

↓

determining channel feedback information of a channel between the second network device and the terminal according to the reference signal ⌐ 1203

↓

sending the channel feedback information to the first network device ⌐ 1204

FIG. 12

| first network device | second network device | terminal |
|---|---|---|

1. obtaining unit arrangement information and block information of the second network device

2. reference signal configuration information

3. reference signal

4. obtaining channel feedback information by performing channel estimation according to the reference signal

5. the channel feedback information

6. determining position information of the terminal relative to the second network device according to the channel feedback information, the unit arrangement information and the block information

7. the first indication information

8. determining a phase shift matrix according to the first indication information

9. reflecting or transmitting a signal incident on a surface of the second network device according to the phase shift matrix

FIG. 13

1400

apparatus for precoding based on an RIS

1410

transceiving module

1420

processing module

FIG. 14

1500

apparatus for precoding based on an RIS

1510
transceiving module

1520
processing module

FIG. 15

1600

apparatus for precoding based on an RIS

1610
transceiving module

1620
processing module

FIG. 16

device 1700 for precoding based on an RIS

1701

1702

memory

1703
computer program

processor

1705
transceiver

antenna

1706

interface circuit

1707

FIG. 17

1803
memory

1802
interface

bus

1801
processor

FIG. 18

## INTERNATIONAL SEARCH REPORT

| International application No. |
|---|
| **PCT/CN2022/115967** |

**A.    CLASSIFICATION OF SUBJECT MATTER**

H04W24/08(2009.01)i;H04B7/0452(2017.01)i

According to International Patent Classification (IPC) or to both national classification and IPC

**B.    FIELDS SEARCHED**

Minimum documentation searched (classification system followed by classification symbols)

IPC:H04W H04B

Documentation searched other than minimum documentation to the extent that such documents are included in the fields searched

Electronic data base consulted during the international search (name of data base and, where practicable, search terms used)

CNTXT; VEN; VCN; ENTXT; CNKI; 3GPP: 可重构, 可重配, 可重新配置, 智能表面, 智能超表面, 智能反射表面, 智能反射阵列, 预编码, 单元, 元素, 阵列, 分布, 排布, 排列, 布置, IRS, ISR, reconfigur+, intelligent, reflect+, surface, array, precod+, element, unit

**C.    DOCUMENTS CONSIDERED TO BE RELEVANT**

| Category* | Citation of document, with indication, where appropriate, of the relevant passages | Relevant to claim No. |
|---|---|---|
| A | WO 2021092746 A1 (HUAWEI TECHNOLOGIES CO., LTD.) 20 May 2021 (2021-05-20) description, page 16, line 11 to page 27, line 8 | 1-37 |
| A | CN 112260739 A (SOUTH CHINA UNIVERSITY OF TECHNOLOGY) 22 January 2021 (2021-01-22) entire document | 1-37 |
| A | WO 2022057918 A1 (SONY GROUP CORP. et al.) 24 March 2022 (2022-03-24) entire document | 1-37 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 April 2023** | **14 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/115967**

| Patent document cited in search report | | | Publication date (day/month/year) | Patent family member(s) | | | Publication date (day/month/year) |
|---|---|---|---|---|---|---|---|
| WO | 2021092746 | A1 | 20 May 2021 | EP | 4047978 | A1 | 24 August 2022 |
| | | | | US | 2022271805 | A1 | 25 August 2022 |
| CN | 112260739 | A | 22 January 2021 | None | | | |
| WO | 2022057918 | A1 | 24 March 2022 | None | | | |

Form PCT/ISA/210 (patent family annex) (July 2022)